(19) Europäisches Patentamt
European Patent Office
Office européen des brevets

(11) EP 4 597 672 A1

(12) **EUROPEAN PATENT APPLICATION**
published in accordance with Art. 153(4) EPC

(43) Date of publication:
**06.08.2025 Bulletin 2025/32**

(21) Application number: **22960068.9**

(22) Date of filing: **29.09.2022**

(51) International Patent Classification (IPC):
***H01M 10/0567*** *(2010.01)*

(52) Cooperative Patent Classification (CPC):
**H01M 10/0567;** Y02E 60/10

(86) International application number:
**PCT/CN2022/122756**

(87) International publication number:
**WO 2024/065431 (04.04.2024 Gazette 2024/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited**
**Zhangwan Town, Jiaocheng District**
**Ningde City**
**Fujian 352100 (CN)**

(72) Inventors:
- **LIU, Jian**
  **Ningde City, Fujian 352100 (CN)**
- **CUI, Hui**
  **Ningde City, Fujian 352100 (CN)**
- **TANG, Chao**
  **Ningde City, Fujian 352100 (CN)**

(74) Representative: **Icosa**
**83 avenue Denfert-Rochereau**
**75014 Paris (FR)**

# (54) ELECTROCHEMICAL DEVICE AND ELECTRONIC DEVICE

(57) An electrochemical device and an electronic device are provided. The electrochemical device includes a negative electrode, a positive electrode, a separator, and an electrolyte. The positive electrode includes a positive electrode active material containing a doping element, where the doping element includes one or more selected from the group consisting of aluminum, magnesium, zirconium, titanium, and lanthanum; and based on a mass of the positive electrode active material, a mass percentage of the doping element is b%, where $0.01 \leq b \leq 3$ . The electrolyte includes a polynitrile additive. The positive electrode active material of this application includes the doping element in the mass percentage of 0.01 mass% to 3 mass%. The doping element can improve the structural stability and thermal stability of the positive electrode active material after delithiation. The polynitrile additive of the electrolyte can form an interfacial protection film on a surface of the positive electrode active material, reducing the risk of side reactions at an interface of the positive electrode active material, thereby reducing the heat generated at the interface, further improving the thermal stability of the positive electrode active material, and improving the cycling performance of the electrochemical device at high temperatures.

EP 4 597 672 A1

## Description

### TECHNICAL FIELD

This application relates to the field of energy storage technologies, and more specifically, to an electrochemical device and an electronic device.

### BACKGROUND

Electrochemical devices, due to their characteristics such as high energy density, high operating voltage, and light weight, have been widely used in electronic products such as mobile phones, notebook computers, and cameras. The safety performance of the electrochemical devices cannot be ignored while the electrochemical performance of the electrochemical devices is improved. As the requirements on the performance of the electronic products are improved, the requirements on the performance of the electrochemical device are also gradually improved.

It has been found through research that intercalation and deintercalation of metal ions included in a positive electrode active material in the electrochemical device are core processes for charging and discharging. Consequently, the positive electrode active material has a significant effect on the performance of the electrochemical device. However, the existing positive electrode active material has low structural stability and low thermal stability, leading to poor cycling performance of the electrochemical device at high temperatures. Therefore, there is an urgent need to develop a positive electrode active material that has high thermal stability and can improve the cycling performance of the electrochemical device.

### SUMMARY

This application provides an electrochemical device and an electronic device. A positive electrode active material included in the electrochemical device has high thermal stability, and the electrochemical device has good cycling performance.

According to a first aspect, this application proposes an electrochemical device. The electrochemical device includes a negative electrode, a positive electrode, a separator, and an electrolyte. The positive electrode includes a positive electrode active material containing a doping element, where the doping element includes one or more selected from the group consisting of aluminum Al, magnesium Mg, zirconium Zr, titanium Ti, and lanthanum La; and based on a mass of the positive electrode active material, a mass percentage of the doping element is b%, where $0.01 \leq b \leq 3$. The separator is disposed between the negative electrode and the positive electrode. The electrolyte includes a polynitrile additive, where the polynitrile additive includes a compound represented by formula (I-A) and/or a compound represented by formula (II-A):

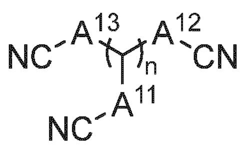 formula (I-A) 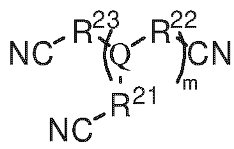 formula (II-A);

where in formula (I-A), $A^{11}$, $A^{12}$, and $A^{13}$ are each independently selected from formula (I-A1) and formula (I-A2):

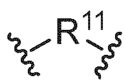 formula (I-A1) 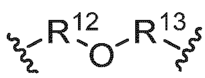 formula (I-A2);

in formula (I-A), n is a positive integer from 1 to 8, and when multiple $A^{11}$ are present, the multiple $A^{11}$ are the same or different, and at least two of $A^{11}$ , $A^{12}$, and $A^{13}$ are selected from I-A2;
in formula (II-A), Q is selected from one of formula (II-A1) or formula (II-A2):

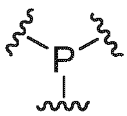 formula (II-A1) 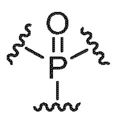 formula (II-A2);

in formula (II-A), m is selected from 1 or 2;

$R^{11}$, $R^{12}$, $R^{13}$, $R^{21}$, $R^{22}$, and $R^{23}$ are each independently selected from a covalent single bond, a substituted or unsubstituted $C_1$-$C_{10}$ alkylene group, a substituted or unsubstituted $C_2$-$C_{10}$ alkenyl group, a substituted or unsubstituted $C_2$-$C_{10}$ alkynylene group, a substituted or unsubstituted $C_6$-$C_{10}$ arylene group, a substituted or unsubstituted $C_3$-$C_{10}$ cycloalkylene group, a substituted or unsubstituted $C_1$-$C_{10}$ heterocyclene group, and a substituted or unsubstituted functional group containing heteroatoms, where when at least one of $R^{11}$, $R^{12}$, $R^{13}$, $R^{21}$, $R^{22}$, or $R^{23}$ is substituted, a substituent group is selected from halogens; and

the heterocyclene group includes at least one of an aliphatic heterocyclene group or an aromatic heterocyclene group;

where

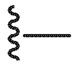

represents a bonding site with an adjacent atom.

In some embodiments, based on a mass of the electrolyte, a mass percentage of the polynitrile additive is X%, where

$0.15 \le X/b \le 100$, and optionally $1 \le X/b \le 50$.

In some embodiments, the formula (I-A2) in the compound represented by formula (I-A) is provided in a quantity of 4 to 10.

In some embodiments, the polynitrile additive includes at least one of compounds represented by formula (I-1) to formula (I-17):

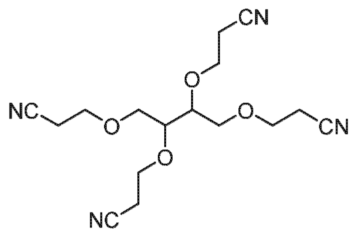

formula (I-1)

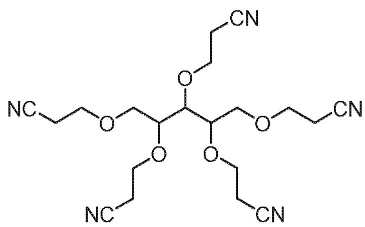

formula (I-2)

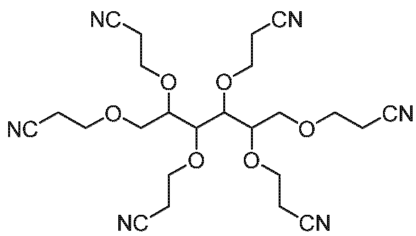

formula (I-3)

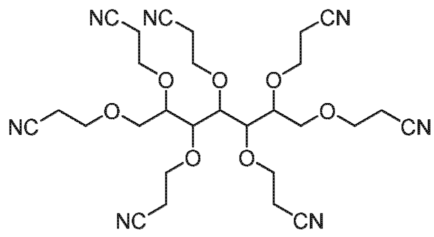

formula (I-4)

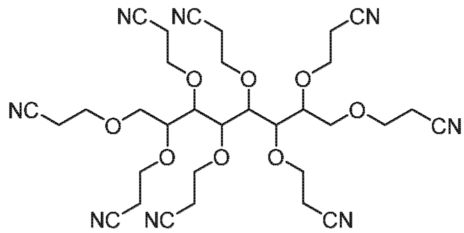

formula (I-5)

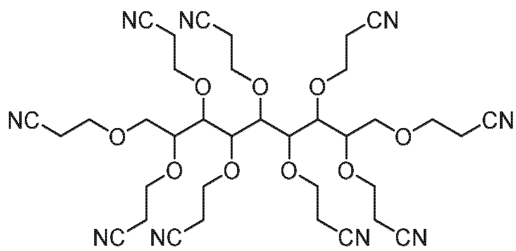

formula (I-6)

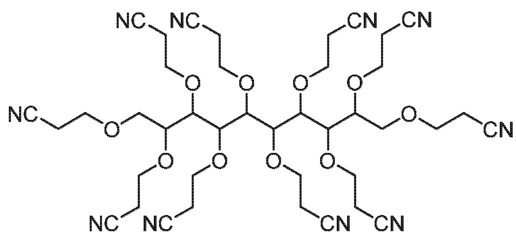

formula (I-7)

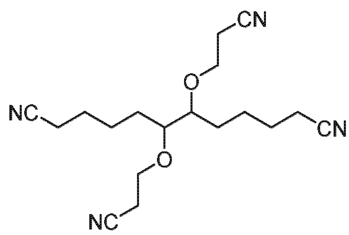

formula (I-8)

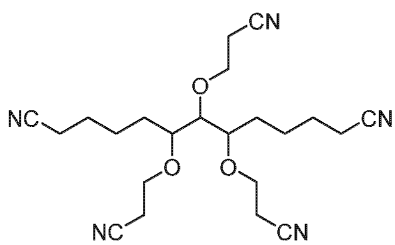

formula (I-9)

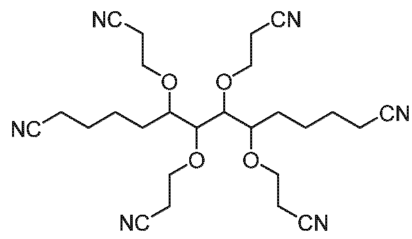

formula (I-10)

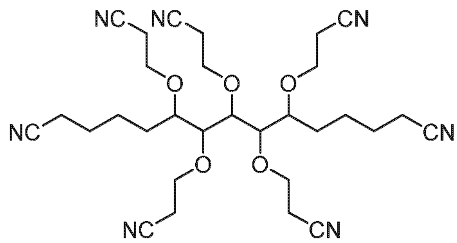

formula (I-11)

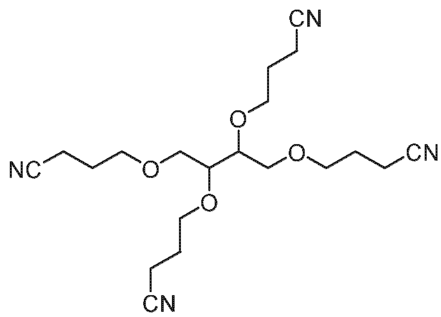

formula (I-12)

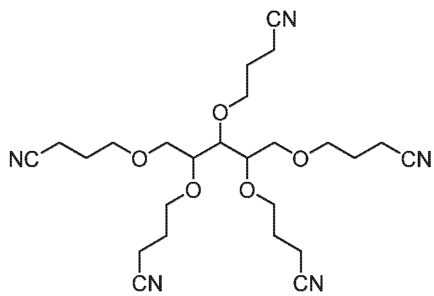

formula (I-13)

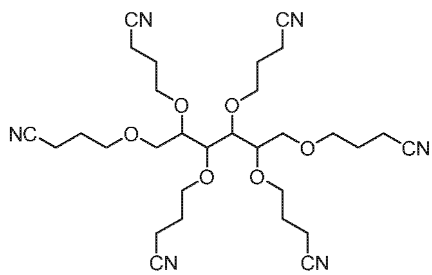

formula (I-14)

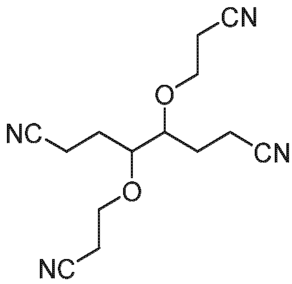

formula (I-15)

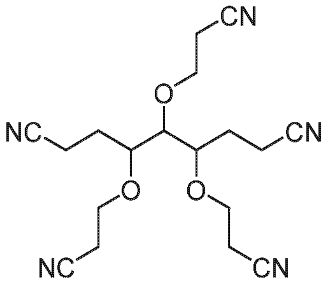

formula (I-16)

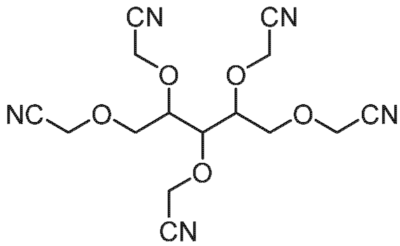

formula (I-17)

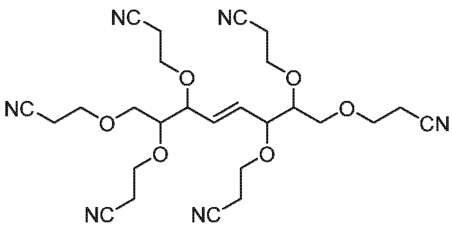

formula (I-18)

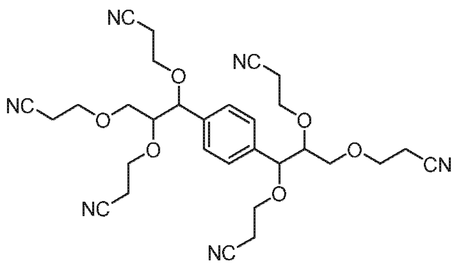

formula (I-19).

In some embodiments, the polynitrile additive includes at least one of compounds represented by formula (II-1) to formula (II-21):

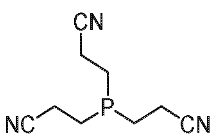

formula (II-1)

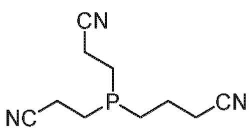

formula (II-2)

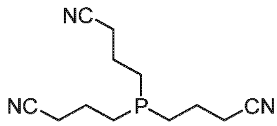
formula (II-3)

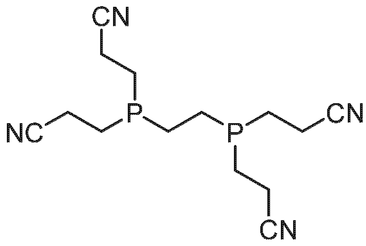
formula (II-4)

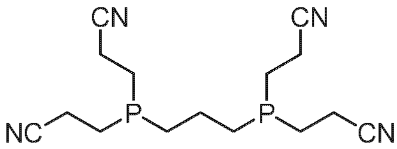
formula (II-5)

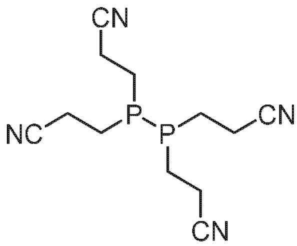
formula (II-6)

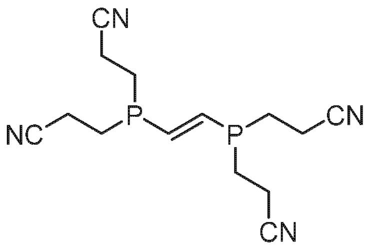
formula (II-7)

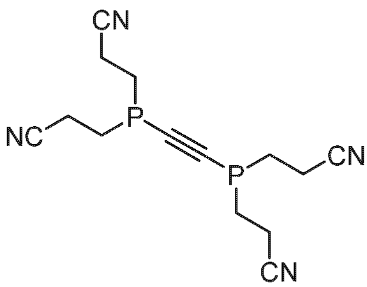
formula (II-8)

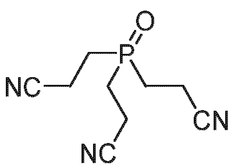
formula (II-9)

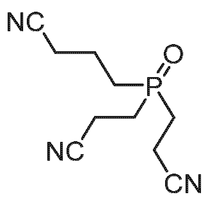
formula (II-10)

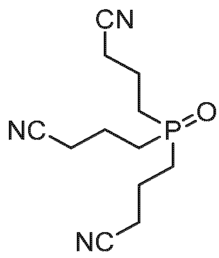
formula (II-11)

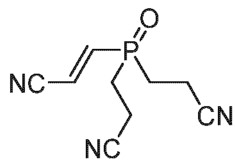
formula (II-12)

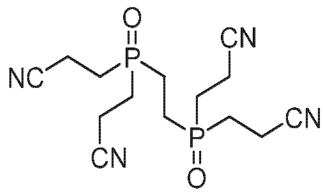
formula (II-13)

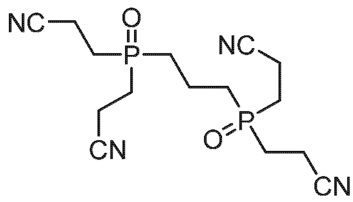
formula (II-14)

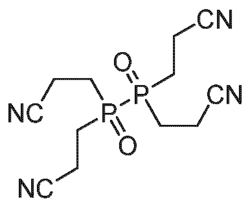
formula (II-15)

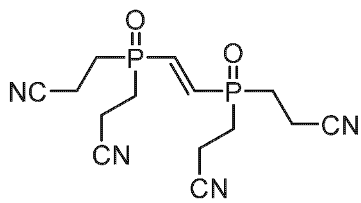
formula (II-16)

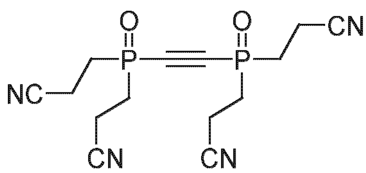
formula (II-17)

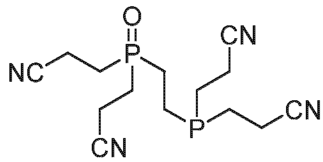
formula (II-18)

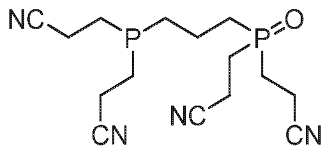 formula (II-19)

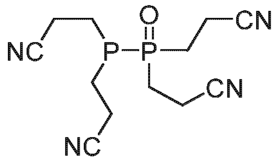 formula (II-20)

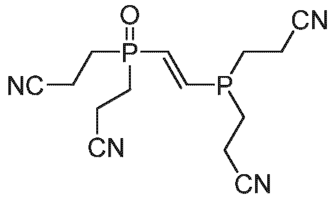 formula (II-21).

In some embodiments, the electrolyte further includes a cyclic sulfonate additive, and the cyclic sulfonate additive includes a compound represented by formula (III):

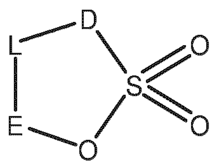 formula (III);

where D and E are each independently selected from a substituted or unsubstituted $C_1$-$C_8$ alkylene group, and when substituted, a substituent group is selected from fluorine atoms;

optionally, D and E are each independently selected from a substituted or unsubstituted $C_1$-$C_6$ alkylene group; and further optionally, D and E are each independently selected from a substituted or unsubstituted $C_1$-$C_4$ alkylene group; and

L is selected from a covalent single bond and $-O-S(=O)_2-$.

In some embodiments, the cyclic sulfonate additive includes a compound represented by formula (III-1):

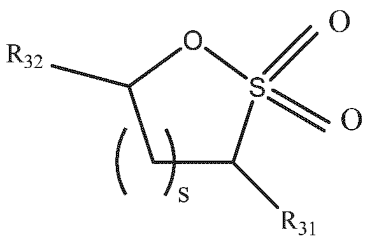 formula (III-1);

where $R_{31}$ and $R_{32}$ are each independently selected from a hydrogen atom, a halogen atom, and a $C_1$-$C_4$ alkyl group; and

s is a positive integer from 1 to 4.

In some embodiments, the cyclic sulfonate additive includes a compound represented by formula (III-2):

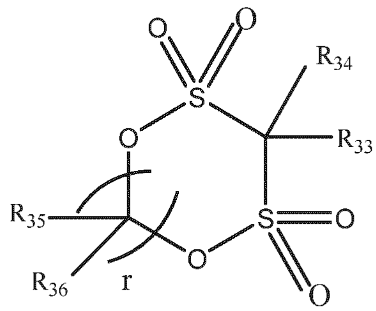

formula (III-2);

where $R_{33}$ and $R_{34}$ are each independently selected from a hydrogen atom, a halogen atom, and a $C_1$-$C_4$ alkyl group; $R_{35}$ and $R_{36}$ are each independently selected from a hydrogen atom, a halogen atom, and a $C_1$-$C_4$ alkyl group; and r is a positive integer from 1 to 4, where when $r \geq 2$, multiple $R_{35}$ are the same or different, and multiple $R_{36}$ are the same or different.

In some embodiments, the cyclic sulfonate additive includes one or more selected from the group consisting of 1,3-propane sultone, 1,2-propane sultone, 1,4-butane sultone, 1,2-butane sultone, 1,3-butane sultone, 2,4-butane sultone, 1,3-pentane sultone, methylene methane disulfonate, and ethylene methane disulfonate.

In some embodiments, based on the mass of the electrolyte, a mass percentage of the cyclic sulfonate additive is c%, where $0.10 \leq c \leq 10$; and optionally, a ratio of the mass percentage b% of the doping element to the mass percentage c% of the cyclic sulfonate additive satisfies: $0.005 \leq b/c \leq 20$.

In some embodiments, the doping element is magnesium Mg; and optionally, $0.01 \leq b \leq 0.5$.

In some embodiments, the positive electrode active material includes first particles and second particles, where an average particle size of the first particles is greater than an average particle size of the second particles.

In some embodiments, the positive electrode active material satisfies at least one of the following conditions:

a $D_v50$ of the first particles satisfies: $10\ \mu m \leq D_v50 \leq 15\ \mu m$;
a $D_v99$ of the first particles satisfies: $20\ \mu m \leq D_v99 \leq 30\ \mu m$;
a ratio of a $D_v50$ to a $D_v99$ of the first particles satisfies: $1.5 \leq D_v99/D_v50 < 3$;
a $D_v50'$ of the second particles satisfies: $2\ \mu m \leq D_v50' \leq 6\ \mu m$; or
a ratio of a $D_v50$ of the first particles to a $D_v50'$ of the second particles satisfies: $2 \leq D_v50/D_v50' < 8$.

In some embodiments, a ratio of a $D_v50$ of the first particles to the mass percentage X% of the polynitrile additive satisfies: $7 \leq D_v50/X \leq 50$, and optionally $10 \leq D_v50/X \leq 30$.

In some embodiments, after the electrochemical device is fully charged to 4.5 V, the positive electrode is tested using a differential scanning calorimeter and has an exothermic peak at 250°C to 300°C.

According to a second aspect, this application proposes an electronic device including the electrochemical device according to any one of these embodiments of first aspect of this application.

In the electrochemical device according to these embodiments of this application, the positive electrode active material includes the doping element in the mass percentage of 0.01% to 3%. The doping element can improve the structural stability and thermal stability of the positive electrode active material after delithiation. In addition, the compound represented by formula (I-A) and the compound represented by formula (II-A) are added into the electrolyte of the electrochemical device, and the compounds can form an interfacial protection film such as a CEI film on a surface of the positive electrode active material. The CEI film can effectively reduce the dissolution of transition metals on the surface of the positive electrode active material, further improving the structural stability of the positive electrode active material, thereby improving the cycling performance of the electrochemical device. Moreover, the CEI film can separate the positive electrode active material from the electrolyte, reducing the risk of side reactions on the surface of the positive electrode active material, thereby reducing the heat generated by side reactions. In other words, the CEI film can reduce the heat generated at an interface of the positive electrode active material, further improving the thermal stability of the positive electrode active material, thereby improving the cycling performance of the electrochemical device at high temperatures. In addition, the CEI film can reduce the risk of swelling, spontaneous combustion, and other hazards caused by heat accumulation inside the electrochemical device, thereby improving the safety performance of the electrochemical device. Therefore, the doping element in the positive electrode active material and the polynitrile additive in the electrolyte cooperate with each other, which can significantly improve the structural stability and thermal stability of the positive electrode active material, and improve the cycling performance and safety performance of the electrochemical device.

## DETAILED DESCRIPTION

Some embodiments of this application are described in detail below. Same or similar components and components with same or similar functions are denoted with similar reference signs throughout this specification of this application. Some embodiments in relevant accompanying drawings described herein are descriptive and illustrative, and are used to provide a basic understanding of this application. Some embodiments of this application should not be construed as limitations on this application.

In addition, quantities, ratios, and other numerical values are sometimes presented in the format of range in this specification. It should be understood that such format of range is used for convenience and simplicity and should be flexibly understood as including not only numerical values explicitly designated as falling within the range but also all individual numerical values or sub-ranges covered by the range as if each numerical value and sub-range are explicitly designated.

In specific embodiments and claims, a list of items connected by the terms "one or more of", "one or more pieces of", "one or more types of" or other similar terms may mean any combination of the listed items. For example, if items A and B are listed, the phrase "at least one of A or B" means only A; only B; or A and B. In another example, if items A, B, and C are listed, the phrase "at least one of A, B, or C" means only A; only B; only C; A and B (exclusive of C); A and C (exclusive of B); B and C (exclusive of A); or all of A, B, and C. The item A may include a single element or a plurality of elements. The item B may include a single element or a plurality of elements. The item C may include a single element or a plurality of elements.

The term "alkyl group" covers linear and branched alkyl groups. For example, the alkyl group may be a $C_1$-$C_{50}$ alkyl group, a $C_1$-$C_{40}$ alkyl group, a $C_1$-$C_{30}$ alkyl group, a $C_1$-$C_{20}$ alkyl group, a $C_1$-$C_{12}$ alkyl group, a $C_1$-$C_{10}$ alkyl group, a $C_1$-$C_6$ alkyl group, or a $C_1$-$C_4$ alkyl group. In some embodiments, the alkyl group includes a methyl group, an ethyl group, a propyl group, an isopropyl group, a butyl group, an isobutyl group, a tert-butyl group, a pentyl group, a hexyl group, a heptyl group, an octyl group, and the like. In addition, the alkyl group may be arbitrarily substituted.

The term "alkylene group" is a group formed by losing two hydrogen atoms from the same carbon of alkane or losing one hydrogen atom from each of two different carbons. For example, the alkylene group may be a $C_1$-$C_{50}$ alkylene group, a $C_1$-$C_{40}$ alkylene group, a $C_1$-$C_{30}$ alkylene group, a $C_1$-$C_{20}$ alkylene group, a $C_1$-$C_{12}$ alkylene group, a $C_1$-$C_{10}$ alkylene group, a $C_1$-$C_6$ alkylene group, or a $C_1$-$C_4$ alkylene group. In some embodiments, the alkylene group includes methylene $-CH_2-$, an ethylene group, 1,2-ethylene, a propylene group, 1,2-propylene, a butylene group, 1,2-butylene, 1,3-butylene, 1,4-butylene, a pentylene group, 1,2-pentylene, and the like. In addition, the alkylene group may be arbitrarily substituted.

The term "alkenyl group" covers linear and branched alkenyl groups. For example, the alkenyl group may be a $C_2$-$C_{50}$ alkenyl group, a $C_2$-$C_{40}$ alkenyl group, a $C_2$-$C_{30}$ alkenyl group, a $C_2$-$C_{20}$ alkenyl group, a $C_2$-$C_{12}$ alkenyl group, a $C_2$-$C_{10}$ alkenyl group, a $C_2$-$C_6$ alkenyl group, or a $C_2$-$C_4$ alkenyl group. In some embodiments, the alkenyl group includes a vinyl group, a propenyl group, a butenyl group, a pentenyl group, a hexenyl group, a heptenyl group, an octenyl group, and the like. In addition, the alkenyl group may be arbitrarily substituted.

The term "alkynyl group" covers linear and branched alkynyl groups. For example, the alkynyl group may be a $C_2$-$C_{50}$ alkynyl group, a $C_2$-$C_{40}$ alkynyl group, a $C_2$-$C_{30}$ alkynyl group, a $C_2$-$C_{20}$ alkynyl group, a $C_2$-$C_{12}$ alkynyl group, a $C_2$-$C_{10}$ alkynyl group, a $C_2$-$C_6$ alkynyl group, or a $C_2$-$C_4$ alkynyl group. In some embodiments, the alkynyl group includes an acetenyl group, a propynyl group, a butynyl group, a pentynyl group, a hexynyl group, a heptynyl group, an octynyl group, and the like. In addition, the alkynyl group may be arbitrarily substituted.

The term "aryl group" refers to a closed aromatic ring or ring system. For example, the aryl group may be a $C_6$-$C_{50}$ aryl group, a $C_6$-$C_{40}$ aryl group, a $C_6$-$C_{30}$ aryl group, a $C_6$-$C_{20}$ aryl group, or a $C_6$-$C_{10}$ aryl group. The $C_6$-$C_{30}$ aryl group refers to a group containing 6 to 30 carbon atoms and including an aromatic ring structure. In some embodiments, the aryl group includes a phenyl group, a naphthyl group, a phenanthryl group, an anthryl group, a biphenyl group, a triphenylene group, a pyrenyl group, a spirobifluorenyl group, a perylene group, an indenyl group, an azulenyl group, and the like.

The term "aromatic heterocyclic group" refers to that carbon atoms in a ring of the aryl group are replaced by heteroatoms, where the heteroatoms may include nitrogen atoms, oxygen atoms, sulfur atoms, and the like.

The term "cycloalkyl group" refers to a closed aliphatic ring. For example, the cycloalkyl group refers to a $C_3$-$C_{50}$ alicyclic ring, a $C_3$-$C_{40}$ alicyclic ring, a $C_3$-$C_{30}$ alicyclic ring, a $C_3$-$C_{20}$ alicyclic ring, or a $C_3$-$C_{10}$ alicyclic ring, where the $C_3$-$C_{10}$ alicyclic ring contains 3 to 10 carbon atoms used to form a ring. In some embodiments, the cycloalkyl group includes a cyclopropyl group, a cyclobutyl group, a cyclopentyl group, a cyclohexyl group, a cycloheptyl group, and the like.

The term "aliphatic heterocyclic group" refers to a cycloalkyl group containing heteroatoms. The heteroatoms may include nitrogen atoms, oxygen atoms, sulfur atoms, and the like.

The term "heterocyclic group" refers to a ring system containing heteroatoms. For example, the heterocyclic group is an aliphatic heterocyclic group or an aromatic heterocyclic group.

The term "halogen atom" refers to a fluorine atom, a chlorine atom, a bromine atom, or the like.

The term "hydrogen" refers to $^1H$ (protium, H), $^2H$ (deuterium, D), or $^3H$ (tritium, T). In various embodiments, "hydrogen" may be $^1H$ (protium, H).

Throughout this specification, substituent groups of compounds are disclosed in groups or ranges. It is explicitly anticipated that such description includes each individual sub-combination of members of these groups and ranges. For example, it is explicitly anticipated that the term "$C_1$-$C_8$ alkyl group" individually discloses $C_1$, $C_2$, $C_3$, $C_4$, $C_5$, $C_6$, $C_7$, $C_8$, $C_1$-$C_8$, $C_1$-$C_7$, $C_1$-$C_6$, $C_1$-$C_5$, $C_1$-$C_4$, $C_1$-$C_3$, $C_1$-$C_2$, $C_2$-$C_8$, $C_2$-$C_7$, $C_2$-$C_6$, $C_2$-$C_5$, $C_2$-$C_4$, $C_2$-$C_3$, $C_3$-$C_8$, $C_3$-$C_7$, $C_3$-$C_6$, $C_3$-$C_5$, $C_3$-$C_4$, $C_4$-$C_8$, $C_4$-$C_7$, $C_4$-$C_6$, $C_4$-$C_5$, $C_5$-$C_8$, $C_5$-$C_7$, $C_5$-$C_6$, $C_6$-$C_8$, $C_6$-$C_7$, and $C_7$-$C_8$ alkyl groups.

In other examples, it is explicitly anticipated that a range of an integer from 5 to 40 individually discloses 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, and 40; and it is explicitly anticipated that a range of an integer from 1 to 20 individually discloses 1, 2, 3, 4, 5, 6, 7, 8, 9, 10, 11, 12, 13, 14, 15, 16, 17, 18, 19, and 20. Based on this, other groups or ranges may be explicitly anticipated.

When the above groups are substituted, substituent groups may be independently selected from halogen atoms.

In high-temperature environments or during charge and discharge cycles, cations in a positive electrode active material included in an electrochemical device may be dissolved out, leading to the structural damage of the positive electrode active material, thereby deteriorating the cycling performance of the electrochemical device at high temperatures.

In view of this, this application has improved the electrochemical device from the perspective of protecting the positive electrode active material, and has designed an electrolyte and the positive electrode active material. A positive electrode protection additive, such as a polynitrile additive, is added into the electrolyte to form a cathode electrolyte interphase (Cathode Electrolyte Interphase, CEI) film on a surface of the positive electrode active material, and a mass percentage of a doping element in the positive electrode active material is adjusted, to reduce the risk of side reactions between the positive electrode active material and the electrolyte. The electrochemical device of this application is also applicable to an electronic device. The following describes in detail the technical solutions of this application.

According to a first aspect, an electrochemical device is provided.

The electrochemical device includes a negative electrode, a positive electrode, a separator, and an electrolyte.

The positive electrode includes a positive electrode active material containing a doping element. The doping element includes one or more selected from the group consisting of aluminum Al, magnesium Mg, zirconium Zr, titanium Ti, and lanthanum La; and based on a mass of the positive electrode active material, a mass percentage of the doping element is b%, where $0.01 \leq b \leq 3$. For example, the positive electrode active material may include transition metals and lithium metal, and the doping element can effectively occupy transition metal sites and/or lithium sites in a crystal phase structure, thereby improving the structural stability and thermal stability after delithiation during charging. Particularly, when the positive electrode active material is doped with the doping element (such as one or more selected from the group consisting of aluminum Al, magnesium Mg, zirconium Zr, titanium Ti, and lanthanum La), and the mass percentage b of the doping element satisfies the above range, the structural stability of the positive electrode active material can be significantly improved, and the thermal stability of the positive electrode active material is also significantly improved.

The separator is disposed between the negative electrode and the positive electrode to separate the negative electrode from the positive electrode, thereby reducing the risk of direct contact between the negative electrode and the positive electrode. The negative electrode, the separator, and the positive electrode have various structural forms. For example, the negative electrode, the separator, and the positive electrode are stacked sequentially to form a stacked structure; or the negative electrode, separator, and positive electrode are wound to form a wound structure.

The electrolyte includes a polynitrile additive. During charging and discharging of the electrochemical device, the polynitrile additive can undergo complexation reactions with transition metals on a surface of the positive electrode active material to form a stable CEI film on the surface of the positive electrode active material. The CEI film can protect the positive electrode active material. The CEI film can effectively reduce the dissolution of transition metals on the surface of the positive electrode active material. Moreover, the CEI film can separate the positive electrode active material from the electrolyte, reducing the risk of side reactions at an interface of the positive electrode active material, thereby reducing the heat generated by side reactions. In other words, the CEI film can reduce the heat generated at the interface of the positive electrode active material.

In some embodiments, the polynitrile additive in these embodiments of this application may include a compound represented by formula (I-A):

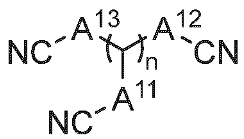

formula (I-A);

where in formula (I-A), $A^{11}$, $A^{12}$, and $A^{13}$ are each independently selected from formula (I-A1) and formula (I-A2):

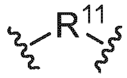 formula (I-A1) 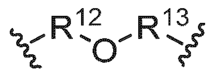 formula (I-A2);

in formula (I-A), n is a positive integer from 1 to 8, and when multiple $A^{11}$ are present, the multiple $A^{11}$ are the same or different, and at least two of $A^{11}$, $A^{12}$, and $A^{13}$ are selected from I-A2; and n is 1, 2, 3, 4, 5, 6, 7, or 8;

Rl1, $R^{12}$, and $R^{13}$ are each independently selected from a covalent single bond, a substituted or unsubstituted $C_1$-$C_{10}$ alkylene group, a substituted or unsubstituted $C_2$-$C_{10}$ alkenylene group, a substituted or unsubstituted $C_2$-$C_{10}$ alkynylene group, a substituted or unsubstituted $C_6$-$C_{10}$ arylene group, a substituted or unsubstituted $C_3$-$C_{10}$ cycloalkylene group, a substituted or unsubstituted $C_1$-$C_{10}$ heterocyclene group, and a substituted or unsubstituted functional group containing heteroatoms, where when at least one of $R^{11}$, $R^{12}$, or $R^{13}$ is substituted, a substituent group is selected from halogens; and further, the substituent group may be a fluorine atom; and

the heterocyclene group includes at least one of an aliphatic heterocyclene group or an aromatic heterocyclene group; where

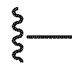

represents a bonding site with an adjacent atom.

In some other embodiments, the polynitrile additive in these embodiments of this application may include a compound represented by formula (II-A):

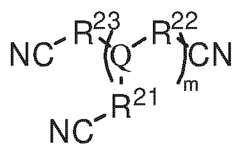 formula (II-A);

where in formula (II-A), Q is selected from formula (II-A1) and formula (II-A2):

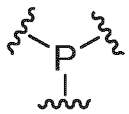 formula (II-A1) 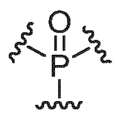 formula (II-A2);

in formula (II-A), m is selected from 1 or 2;

$R^{21}$, $R^{22}$, and $R^{23}$ are each independently selected from a covalent single bond, a substituted or unsubstituted $C_1$-$C_{10}$ alkylene group, a substituted or unsubstituted $C_2$-$C_{10}$ alkenylene group, a substituted or unsubstituted $C_2$-$C_{10}$ alkynylene group, a substituted or unsubstituted $C_6$-$C_{10}$ arylene group, a substituted or unsubstituted $C_3$-$C_{10}$ cycloalkylene group, a substituted or unsubstituted $C_1$-$C_{10}$ heterocyclene group, and a substituted or unsubstituted functional group containing heteroatoms, where when at least one of $R^{21}$, $R^{22}$, or $R^{23}$ is substituted, a substituent group is selected from halogens; and further, the substituent group may be a fluorine atom; and

the heterocyclene group includes at least one of an aliphatic heterocyclene group or an aromatic heterocyclene group; where

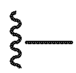

represents a bonding site with an adjacent atom.

In still some other embodiments, the polynitrile additive may include the compound represented by formula (I-A) and the compound represented by formula (II-A), where the compound represented by formula (I-A) and the compound represented by formula (II-A) are as described in the foregoing embodiments and are not repeated herein.

In this application, the compound represented by formula (I-A) and the compound represented by formula (II-A) are added into the electrolyte to significantly improve the high-temperature storage performance and cycling performance

of the electrochemical device using the electrolyte. The possible reason is that the electrolyte contains an ether-group-containing polynitrile (-CN) compound and a phosphorous-containing polynitrile (-CN) compound, where the cyano group (-CN) can stabilize high-valence transition metals of the positive electrode and inhibit the continuous decomposition of the electrolyte. In addition, the phosphorous-containing polynitrile (-CN) compound can form interfacial protection films on the positive and negative electrodes, further protecting surfaces of the positive and negative electrodes. Therefore, the electrolyte into which the compound represented by formula (I-A) and the compound represented by formula (II-A) are added can significantly improve the high-temperature storage performance and cycling performance of the electrochemical device using the electrolyte.

In the electrochemical device according to these embodiments of this application, the positive electrode active material includes the doping element in the mass percentage of 0.01 % to 3 %. The doping element can improve the structural stability and thermal stability of the positive electrode active material after delithiation. In addition, the compound represented by formula (I-A) and the compound represented by formula (II-A) are added into the electrolyte of the electrochemical device, and the compounds can form an interfacial protection film such as a CEI film on the surface of the positive electrode active material. The CEI film can effectively reduce the dissolution of transition metals on the surface of the positive electrode active material, further improving the structural stability of the positive electrode active material, thereby improving the cycling performance of the electrochemical device. Moreover, the CEI film can separate the positive electrode active material from the electrolyte, reducing the risk of side reactions on the surface of the positive electrode active material, thereby reducing the heat generated by side reactions. In other words, the CEI film can reduce the heat generated at the interface of the positive electrode active material, further improving the thermal stability of the positive electrode active material, thereby improving the cycling performance of the electrochemical device at high temperatures. In addition, the CEI film can reduce the risk of swelling, spontaneous combustion, and other hazards caused by heat accumulation inside the electrochemical device, thereby improving the safety performance of the electrochemical device. Therefore, the doping element in the positive electrode active material and the polynitrile additive in the electrolyte cooperate with each other, which can significantly improve the structural stability and thermal stability of the positive electrode active material, and improve the cycling performance and safety performance of the electrochemical device.

[Polynitrile additive in electrolyte]

The electrolyte in this application includes a polynitrile additive.

In some embodiments, based on a mass of the electrolyte, a mass percentage of the polynitrile additive is X%, where $0.15 \leq X/b \leq 100$. When the percentages of the polynitrile additive and the doping element satisfy the above range, especially when $1 \leq X/b \leq 50$, the polynitrile additive and the doping element can synergize with each other, which can further improve the structural stability and thermal stability of the positive electrode active material, and improve the cycling performance and safety performance of the electrochemical device.

In some embodiments, the formula (I-A2) in the compound represented by formula (I-A) is provided in a quantity of 4 to 10.

In some embodiments, the polynitrile additive may be ether-group-containing polynitrile, and the polynitrile additive includes at least one of compounds represented by formula (I-1) to formula (I-16):

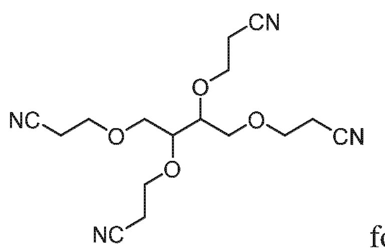

formula (I-1)

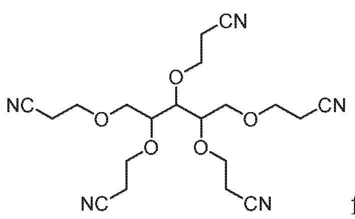

formula (I-2)

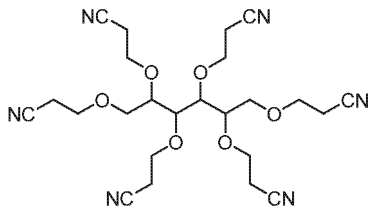

formula (I-3)

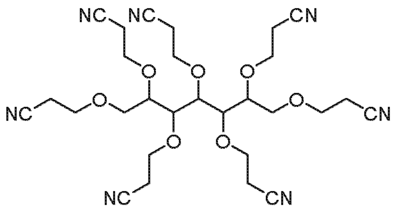

formula (I-4)

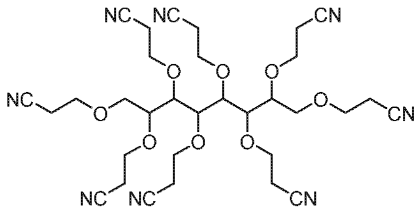

formula (I-5)

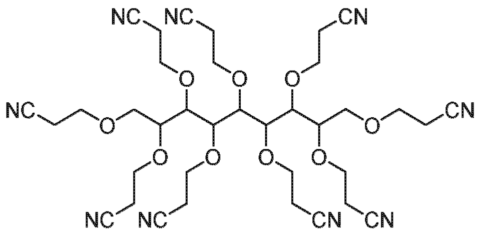

formula (I-6)

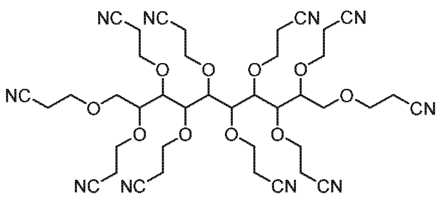

formula (I-7)

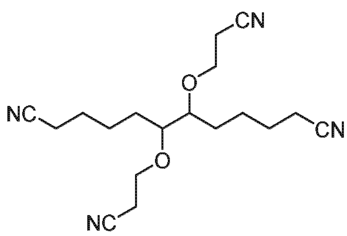

formula (I-8)

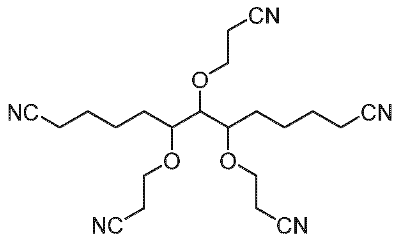

formula (I-9)

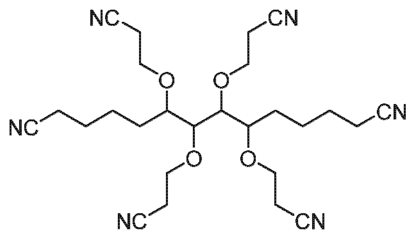

formula (I-10)

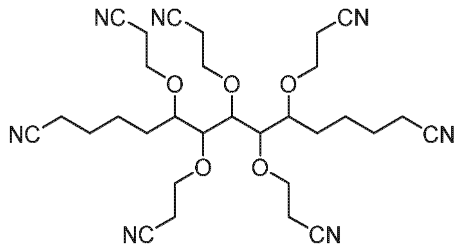

formula (I-11)

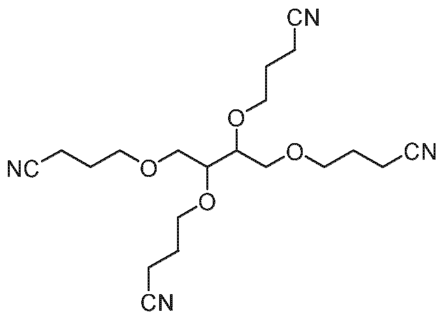

formula (I-12)

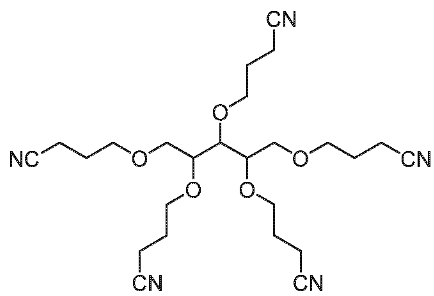

formula (I-13)

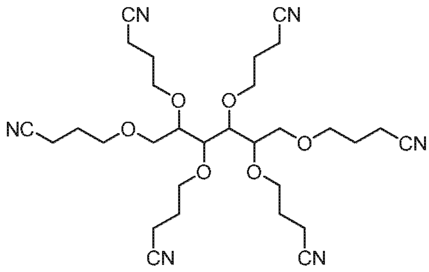

formula (I-14)

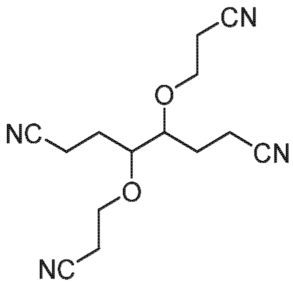

formula (I-15)

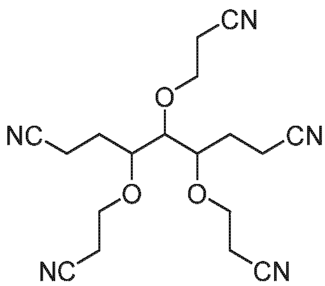

formula (I-16).

In some embodiments, the polynitrile additive may further include at least one of compounds represented by formula (I-17) to formula (I-19):

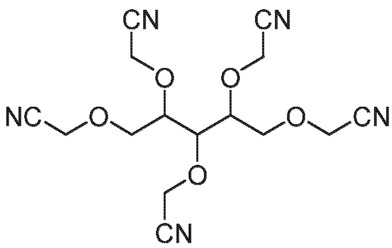

formula (I-17)

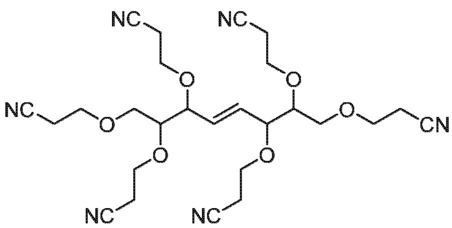

formula (I-18)

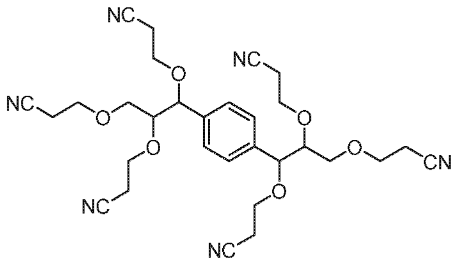

formula (I-19).

In some embodiments, the polynitrile additive may be phosphine with multiple cyano groups, and the polynitrile additive includes at least one of compounds represented by formula (II-1) to formula (II-8):

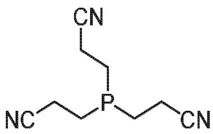
formula (II-1)

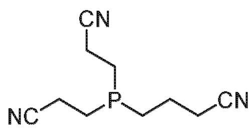
formula (II-2)

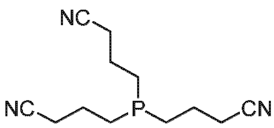
formula (II-3)

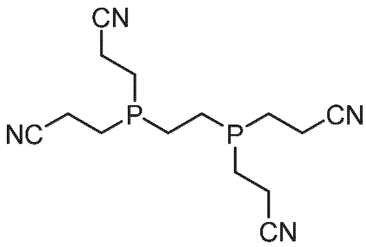
formula (II-4)

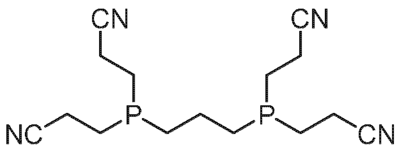
formula (II-5)

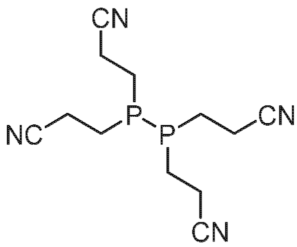
formula (II-6)

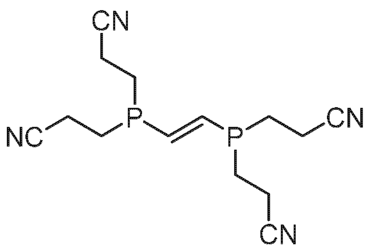
formula (II-7)

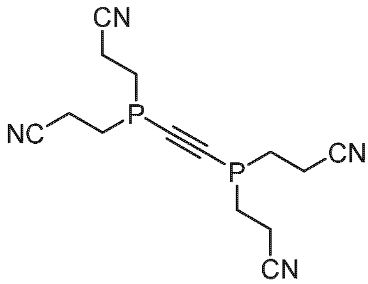

formula (II-8).

In some embodiments, the polynitrile additive may be phosphorylcontaining polynitrile, and the polynitrile additive includes at least one of compounds represented by formula (II-9) to formula (II-21):

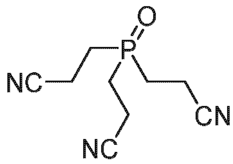

formula (II-9)

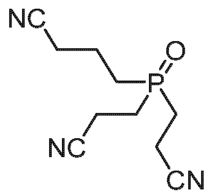

formula (II-10)

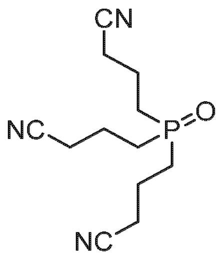

formula (II-11)

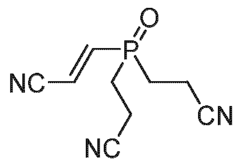

formula (II-12)

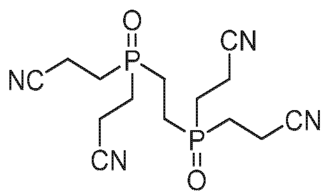

formula (II-13)

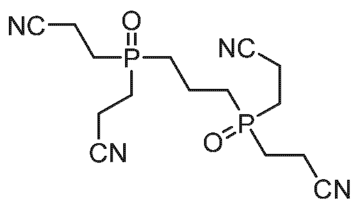

formula (II-14)

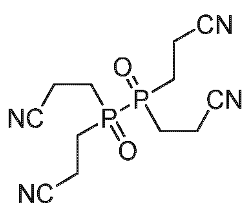

formula (II-15)

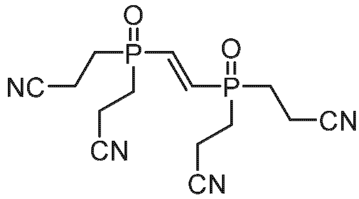

formula (II-16)

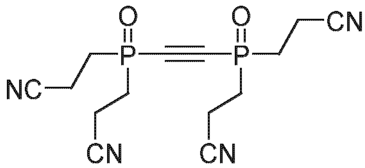

formula (II-17)

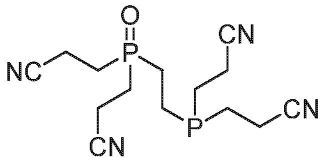

formula (II-18)

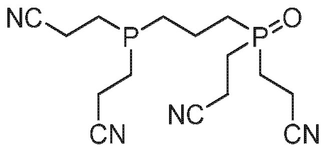

formula (II-19)

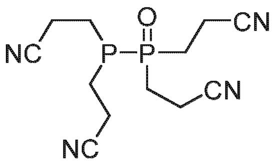

formula (II-20)

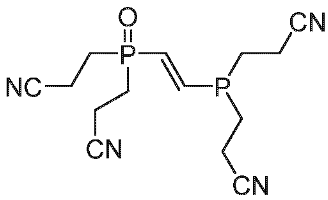

formula (II-21).

In some embodiments, the polynitrile additive may further include at least one of compounds represented by formula (II-22) to formula (II-24):

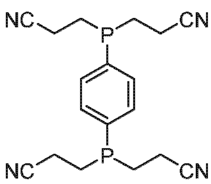

formula (II-22)

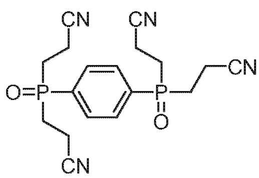

formula (II-23)

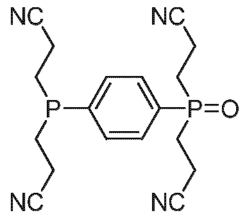

formula (II-24).

[Cyclic sulfonate additive in electrolyte]

In some embodiments, the electrolyte further includes a cyclic sulfonate additive, and the cyclic sulfonate additive includes a compound represented by formula (III):

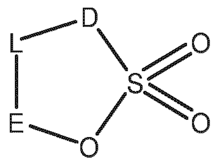

formula (III);

where D and E are each independently selected from a substituted or unsubstituted $C_1$-$C_8$ alkylene group, and during substitution, a substituent group is selected from fluorine atoms;

optionally, D and E are each independently selected from a substituted or unsubstituted $C_1$-$C_6$ alkylene group; and further optionally, D and E are each independently selected from a substituted or unsubstituted $C_1$-$C_4$ alkylene group; and

L is selected from a covalent single bond and $-O-S(=O)_2-$.

During charging and discharging of the electrochemical device according to these embodiments of this application, the cyclic sulfonate additive can react with the positive electrode active material, and the cyclic sulfonate additive can undergo reductive ring-opening reactions, so that an interfacial film is formed on the surface of the positive electrode active material, thereby protecting the positive electrode active material.

In some examples of the cyclic sulfonate additive, the cyclic sulfonate additive may be monosultone, and the cyclic sulfonate additive includes a compound represented by formula (III-1):

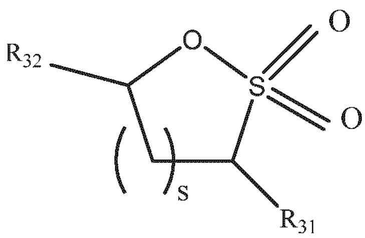

formula (III-1);

where $R_{31}$ and $R_{32}$ are each independently selected from a hydrogen atom, a halogen atom, and a $C_1$-$C_4$ alkyl group; and

s is a positive integer from 1 to 4, where s is 1, 2, 3, or 4.

For example, the cyclic sulfonate additive includes one or more selected from the group consisting of 1,3-propane sultone, 1,2-propane sultone, 1,4-butane sultone, 1,2-butane sultone, 1,3-butane sultone, 2,4-butane sultone, and 1,3-pentane sultone.

In some other examples of the cyclic sulfonate additive, the cyclic sulfonate additive may be disultone, and the cyclic sulfonate additive includes a compound represented by formula (III-2):

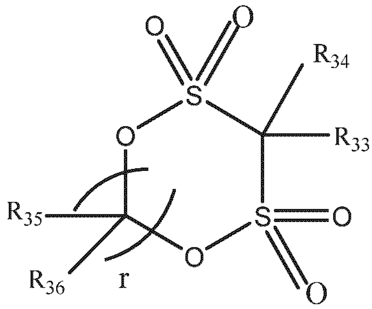

formula (III-2);

where $R_{33}$ and $R_{34}$ are each independently selected from a hydrogen atom, a halogen atom, and a $C_1$-$C_4$ alkyl group; $R_{35}$ and $R_{36}$ are each independently selected from a hydrogen atom, a halogen atom, and a $C_1$-$C_4$ alkyl group; and r is a positive integer from 1 to 4, where when r≥2, multiple $R_{35}$ are the same or different, and multiple $R_{36}$ are the same or different; where r may be 1, 2, 3, or 4.

For example, the cyclic sulfonate additive includes methylene methane disulfonate and/or ethylene methane disulfonate. The cyclic sulfonate additive of this type can also form an interfacial protection film on the negative electrode, thereby protecting the surface of the negative electrode, and further improving the high-temperature storage performance and cycling performance of the electrochemical device.

In still some other examples of the cyclic sulfonate additive, the cyclic sulfonate additive may include the compound represented by formula (III-1) and the compound represented by formula (III-2). For example, the specific examples of the compound represented by formula (III-1) and the compound represented by formula (III-2) are as described above and are not repeated herein.

For example, the cyclic sulfonate additive may include 1,3-propane sultone (PS), 1,4-butane sultone (BS), and methylene methane disulfonate (MMDS). The additive of this type has excellent film-forming effects on the surfaces of the positive and negative electrodes, and its cost is low.

In some embodiments, based on the mass of the electrolyte, a mass percentage of the cyclic sulfonate additive is c%, where 0.10≤c≤10. The cyclic sulfonate additive satisfying the above mass percentage allows for good film-forming effects on the surfaces of the positive and negative electrodes, and the density of the interfacial protection film is high. This can further improve the protection of the surfaces of the positive and negative electrodes. The interfacial protection film can reduce the risk of electron transfer among the positive electrode, the electrolyte, and the negative electrode to some extent, thereby reducing the adverse effects caused by side reactions due to electron transfer; and the thickness of the interfacial protection film is moderate. This can ensure the effective transmission of lithium ions in the interfacial protection film and is conducive to deintercalation of lithium ions during cycling, thereby reducing the cycling resistance.

In some embodiments, a ratio of the mass percentage b% of the doping element to the mass percentage c% of the cyclic sulfonate additive satisfies: 0.005≤b/c≤20.

[Electrolytic salt in electrolyte]

The electrolyte of this application further contains an electrolytic salt. The electrolytic salt is an electrolytic salt known in the art and applied to electrochemical devices. For different electrochemical devices, appropriate electrolytic salts can be selected. For example, for a lithium-ion battery, an electrolytic salt typically uses a lithium salt.

In some embodiments, the lithium salt includes or is selected from at least one of an organic lithium salt or an inorganic lithium salt.

In some embodiments, the lithium salt includes or is selected from at least one of lithium hexafluorophosphate ($LiPF_6$), lithium hexafluoroantimonate ($LiSbF_6$), lithium hexafluoroarsenate ($LiAsF_6$), lithium perfluorobutanesulfonate ($LiC_4F_9SO_3$), lithium perchlorate ($LiClO_4$), lithium aluminate ($LiAlO_2$), lithium tetrachloroaluminate ($LiAlCl_4$), lithium bis(fluorosulfonyl)imide ($LiN(C_xF_{2x+1}SO_2)(C_yF_{2y+1}SO_2)$, where x and y are natural numbers), lithium chloride (LiCl), or lithium fluoride (LiF). In some embodiments, a mass percentage of the lithium salt in the electrolyte of this application is 10wt% to 15wt%, for example, it may be 10%, 11%, 12%, 13%, 14%, or 15%, or falls within a range defined by any two of these values.

[Non-aqueous organic solvent in electrolyte]

The electrolyte of this application further contains a non-aqueous organic solvent. In some embodiments, the non-aqueous organic solvent includes at least one of carbonate, carboxylate, an ether compound, a sulfone compound, or

another aprotic solvent. In some embodiments, a mass percentage of the non-aqueous organic solvent is 21% to 90%, for example, it may be 21%, 30%, 40%, 50%, 60%, 70%, 80%, or 90%, or falls within a range defined by any two of these values.

In some embodiments, the carbonate solvent includes at least one of dimethyl carbonate, diethyl carbonate, methyl ethyl carbonate, methyl propyl carbonate, ethyl propyl carbonate, dipropyl carbonate, vinyl carbonate, propylene carbonate, butylene carbonate, or bis(2,2,2-trifluoroethyl) carbonate.

In some embodiments, the carboxylate solvent includes at least one of methyl acetate, ethyl acetate, n-propyl acetate, n-butyl acetate, methyl propionate, ethyl propionate, propyl propionate, butyl propionate, methyl butyrate, ethyl butyrate, propyl butyrate, butyl butyrate, γ-butyrolactone, valerolactone, or butyrolactone.

In some embodiments, the ether compound solvent includes at least one of ethylene glycol dimethyl ether, diethylene glycol dimethyl ether, tetraethylene glycol dimethyl ether, dibutyl ether, tetrahydrofuran, 2-methyltetrahydrofuran, bis(2,2,2-trifluoroethyl) ether, 1,3-dioxane, or 1,4-dioxane.

In some embodiments, the sulfone compound includes at least one of ethyl vinyl sulfone, methyl isopropyl sulfone, isopropyl sec-butyl sulfone, or sulfolane.

The non-aqueous organic solvent in the electrolyte can use a single non-aqueous organic solvent or a mixture of multiple non-aqueous organic solvents. When a mixed solvent is used, a mixing ratio can be controlled based on the desired performance of the electrochemical device.

[Positive electrode]

The positive electrode is a positive electrode that is known in the art and can be used for electrochemical devices. In some embodiments, the positive electrode includes a positive electrode current collector and a positive electrode active material layer. The positive electrode active material layer is disposed on a surface of the positive electrode current collector. The positive electrode active material layer includes a positive electrode active material.

In some embodiments, the structure of the positive electrode is a structure of a positive electrode that is known in the art and can be used for electrochemical devices.

In some embodiments, the positive electrode current collector is made of metal. The metal is, for example but not limited to, an aluminum foil.

The positive electrode active material can be selected from various substances known in the art, where the substances can be used as positive electrode active materials for electrochemical devices and can implement reversible intercalation and deintercalation of active ions.

In some embodiments, the positive electrode active material includes composite oxide of lithium and at least one selected from cobalt, manganese, and nickel. Specifically, the following compounds can be used: at least one or a mixture of two or more of $LiCoO_2$, $LiNiO_2$, $LiMnO_2$, $LiMn_2O_4$, $Li(Ni_aCo_bMn_c)O_2$ ($0<a<1$, $0<b<1$, $0<c<1$, and $a+b+c=1$), $LiMn_2O_4LiNi_{1-y}Co_yO_2$, $LiCo_{1-y}Mn_yO_2$, $LiNi_{1-y}Mn_yO_2$ ($0<y<1$), $Li(Ni_aMn_bCo_c)O_4$ ($0<a<2$, $0<b<2$, $0<c<2$, and $a+b+c=2$), $LiMn_{2-z}Ni_zO_4$, $LiMn_{2-z}Co_zO_4$ ($0<z<2$), $Li(Ni_aCo_bAl_e)O_2$ ($0<a<1$, $0<b<1$, $0<c<1$, and $a+b+c=1$), $LiCoPO_4$, or $LiFePO_4$. In some embodiments, the positive electrode active material further includes at least one of sulfide, selenide, or halide.

For example, a main material of the positive electrode active material may be lithium cobalt oxide $LiCoO_2$. During charging, lithium ions are continuously deintercalated out of and intercalated into the negative electrode. With deintercalation of the lithium ions, a crystal phase structure of lithium cobalt oxide may change, which may lead to a tendency of structural damage. Although the doping mechanism is not clear, lithium cobalt oxide is doped with a doping element (such as one or more selected from the group consisting of aluminum Al, magnesium Mg, zirconium Zr, titanium Ti, and lanthanum La). The doping element can occupy lithium sites and the like, thereby improving the structural stability of lithium cobalt oxide after delithiation, and significantly improving the thermal stability of lithium cobalt oxide. In some other examples, the main material of the positive electrode active material may alternatively be lithium manganate, lithium nickelate, or the like, and can be selected based on needs.

In some embodiments, the mass percentage b% of the doping element satisfies $0.01 \leq b \leq 0.5$. The mass percentage of the doping element satisfying the above range can significantly improve the thermal stability of the positive electrode active material and improve the cycling performance of the electrochemical device.

In some embodiments, the doping element may be magnesium Mg. When magnesium Mg is doped into the positive electrode active material, the hot-box performance and cycling performance of the electrochemical device can be significantly improved. The possible reason is that the doping of element Mg can effectively occupy transition metal sites or lithium sites in the positive electrode material, significantly improving the structural stability of the positive electrode material after delithiation, thereby significantly improving the cycling performance of the electrochemical device. The doping of element Mg can effectively improve the thermal stability of the positive electrode material and thus significantly improve the hot-box performance.

In some embodiments, when the doping element is magnesium Mg, a mass percentage b1% of element Mg satisfies $0.01 \leq b1 \leq 0.5$. The mass percentage of element Mg satisfying the above range can ensure low resistance of the

electrochemical device on the basis of improving the structural stability of the positive electrode active material, and essentially causes no effect on an extractable gram capacity of the positive electrode active material, thereby ensuring the cycling performance of the electrochemical device.

In addition, when the ratio of the mass percentage of element Mg and the mass percentage of the polynitrile additive satisfy $0.15 \leq X/b1 \leq 100$, especially when $1 \leq X/b \leq 150$, element Mg and the polynitrile additive can synergistically act to improve the hot-box performance and cycling performance of the electrochemical device.

In some embodiments, the positive electrode active material includes first particles and second particles, where an average particle size of the first particles is greater than an average particle size of the second particles. The positive electrode active material using the first particles and second particles with various particle sizes is conducive to increasing a compacted density of the positive electrode, thereby increasing the energy density of the electrochemical device.

In some embodiments, the positive electrode active material satisfies at least one of the following conditions:

- a $D_v50$ of the first particles satisfies: $10\ \mu m \leq D_v50 \leq 15\ \mu m$;
- a $D_v99$ of the first particles satisfies: $20\ \mu m \leq D_v99 \leq 30\ \mu m$;
- a ratio of a $D_v50$ to a $D_v99$ of the first particles satisfies: $1.5 \leq D_y99/D_v50 < 3$; a $D_v50'$ of the second particles satisfies: $2\ \mu m \leq D_v50' \leq 6\ \mu m$; or
- a ratio of a $D_v50$ of the first particles to a $D_v50'$ of the second particles satisfies: $2 \leq D_v50/D_v50' < 8$.

In some embodiments, a ratio of a $D_v50$ of the first particles to the mass percentage X of the polynitrile additive satisfies: $7 \leq D_v50/X \leq 50$, and optionally $10 \leq D_v50/X \leq 30$. Given that smaller particles of the positive electrode active material lead to a relatively large specific surface area and a larger contact area with the electrolyte, the positive electrode active material is more prone to side reactions with the electrolyte, thus leading to lower structural stability and thermal stability of the positive electrode active material. Therefore, in these embodiments of this application, the particle size of the first particles cooperates with the amount of the polynitrile additive used to provide more effective protection for the first particles, thereby improving the structural stability and thermal stability of the positive electrode active material.

In some embodiments, after the electrochemical device is fully charged to 4.5 V (meaning that the electrochemical device is charged to 4.5 V at a constant current of 0.2C and then charged to 0.05C at a constant voltage of 4.5 V), the positive electrode is tested using a differential scanning calorimeter (Differential Scanning Calorimeter, DSC) and has an exothermic peak at 250°C to 300°C. Thus, it can be seen that the thermal stability of the positive electrode active material is relatively high.

In some embodiments, the positive electrode active material layer further includes a positive electrode binder and a positive electrode conductive agent. The positive electrode binder is used to improve both the adhesion between the particles of the positive electrode active material and the adhesion between the particles of the positive electrode active material and the current collector. In some embodiments, the positive electrode binder includes at least one of polyvinyl alcohol, carboxymethyl cellulose, hydroxypropyl cellulose, diacetyl cellulose, polyvinyl chloride, carboxylated polyvinyl chloride, polyvinyl fluoride, polymers containing ethylene oxide, polyvinylpyrrolidone, polyurethane, polytetrafluoroethylene, poly(vinylidene difluoride), polyethylene, polypropylene, styrene-butadiene rubber, acrylated styrene-butadiene rubber, epoxy resin, or nylon. The positive electrode conductive agent is used to provide conductivity to the electrode and may include any conductive material as long as no chemical change is caused. In some embodiments, the positive electrode conductive agent includes at least one of natural graphite, artificial graphite, carbon black, acetylene black, Ketjen black, carbon fiber, metal powder, metal fiber, or polyphenylene derivatives. In some embodiments, the metal in the metal powder and metal fiber includes at least one of copper, nickel, aluminum, or silver.

In some embodiments, a preparation method of the positive electrode is a preparation method of a positive electrode that is known in the art and can be used for electrochemical devices. In some embodiments, during preparation of a positive electrode slurry, a solvent is typically added. The positive electrode active material is added with a binder and then added with a conductive material and thickener based on needs. Then, the resulting mixture is dissolved or dispersed in the solvent to form the positive electrode slurry. The solvent volatilizes to be removed during drying. The solvent is a solvent that is known in the art and can be used as a positive electrode active material layer. The solvent is, for example, but not limited to, N-methylpyrrolidone (NMP).

[Negative electrode]

The negative electrode is a negative electrode that is known in the art and can be used for electrochemical devices. In some embodiments, the negative electrode includes a negative electrode current collector and a negative electrode active material layer. The negative electrode active material layer is disposed on a surface of the negative electrode current collector. The negative electrode active material layer includes a negative electrode active material.

In some embodiments, the structure of the negative electrode is a structure of a negative electrode that is known in the art and can be used for electrochemical devices.

In some embodiments, the negative electrode current collector is made of metal, for example, but not limited to, a copper foil, a nickel foil, a stainless steel foil, a titanium foil, nickel foam, copper foam, a polymer substrate coated with conductive metal, or a combination thereof.

The negative electrode active material can be selected from various substances that are known in the art, can be used as negative electrode active materials for electrochemical devices, and are capable of implementing reversible intercalation and deintercalation of active ions, or substances capable of implementing reversible doping and dedoping of active ions.

In some embodiments, the negative electrode active material includes at least one of lithium metal, a lithium metal alloy, a carbon material, a material capable of implementing doping/dedoping of lithium, or a transition metal oxide. In some embodiments, the carbon material can be selected from various carbon materials that are known in the art and can be used as carbon-based negative electrode active materials for electrochemical devices. In some embodiments, the carbon material includes at least one of crystalline carbon or amorphous carbon. In some embodiments, the crystalline carbon is natural graphite or artificial graphite. In some embodiments, the shape of the crystalline carbon is amorphous, plate-like, flake-like, spherical, or fibrous. In some embodiments, the crystalline carbon is low-crystallinity carbon or high-crystallinity carbon. In some embodiments, the low-crystallinity carbon includes at least one of soft carbon or hard carbon. In some embodiments, the high-crystallinity carbon includes at least one of natural graphite, crystalline graphite, pyrolytic carbon, mesophase pitchbased carbon fiber, mesophase carbon microbeads, mesophase pitch, or high-temperature calcined carbon.

In some embodiments, the high-temperature calcined carbon is petroleum or coke derived from coal tar pitch. In some embodiments, the amorphous carbon includes at least one of soft carbon, hard carbon, a mesophase pitch carbonization product, or calcined coke. In some embodiments, the negative electrode active material includes a transition metal oxide. In some embodiments, the transition metal oxide includes at least one of vanadium oxide or lithium vanadium oxide. In some embodiments, the negative electrode active material includes at least one of Si, $SiO_x$ ($0<x<2$), an Si/C composite, an Si-Q alloy, Sn, $SnO_z$, an Sn-C composite, or an Sn-R alloy, where Q is selected from at least one of alkali metals, alkaline earth metals, elements of groups 13 to 16, transition elements, or rare earth elements, and Q is not Si; and R is selected from at least one of alkali metals, alkaline earth metals, elements of groups 13 to 16, transition elements, or rare earth elements, and R is not Sn. In some embodiments, Q and R each include at least one of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, or Po.

In some embodiments, the negative electrode active material layer further includes a negative electrode binder and a negative electrode conductive agent. In some embodiments, the negative electrode binder includes at least one of poly(vinylidene difluoride)-hexafluoropropylene copolymer (PVDF-co-HFP), poly(vinylidene difluoride), polypropylene cyanide, polymethyl methacrylate, polyvinyl alcohol, carboxymethyl cellulose, hydroxypropyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyethylene, polypropylene, styrene-butadiene rubber, acrylated styrene-butadiene rubber, epoxy resin, or nylon. In some embodiments, the negative electrode conductive agent is used to provide conductivity to the electrode and may include any conductive material as long as no chemical change is caused. In some embodiments, the negative electrode conductive agent includes any one of a carbon-based material, a metal-based material, or a conductive polymer, or a mixture thereof. In some embodiments, the carbon-based material includes at least one of natural graphite, artificial graphite, carbon black, acetylene black, Ketjen black, or carbon fiber. In some embodiments, the metal-based material includes at least one of metal powder or metal fiber of copper, nickel, aluminum, or silver. In some embodiments, the conductive polymer includes a polyphenylene derivative.

In some embodiments, a preparation method of the negative electrode is a preparation method of a negative electrode that is known in the art and can be used for electrochemical devices. In some embodiments, during preparation of a negative electrode slurry, a solvent is typically added. The negative electrode active material is added with a binder and then added with a conductive material and thickener based on needs. Then, the resulting mixture is dissolved or dispersed in the solvent to form the negative electrode slurry. The solvent volatilizes to be removed during drying. The solvent is a solvent that is known in the art and can be used as a negative electrode active material layer. The solvent is, for example, but not limited to, water. The thickener is a thickener that is known in the art and can be used as a negative electrode active material layer. The thickener is, for example, but not limited to, sodium carboxymethyl cellulose.

A mixing ratio of the negative electrode active material, binder, and thickener in the negative electrode active material layer is not particularly limited in this application, and the mixing ratio can be controlled based on the desired performance of the electrochemical device.

[Separator]

The separator is a separator that is known in the art and can be used for electrochemical devices, for example, but not limited to, a polyolefin microporous film. In some embodiments, the separator includes at least one of polyethylene

(PE), an ethylene-propylene copolymer, polypropylene (PP), an ethylene-butene copolymer, an ethylene-hexene copolymer, or an ethylene-methyl methacrylate copolymer.

In some embodiments, the separator is a single-layer separator or a multilayer separator.

In some embodiments, the separator is coated with a coating. In some embodiments, the coating includes at least one of an organic coatings or an inorganic coating, where the organic coating is selected from at least one of polyvinylidene fluoride, vinylidene fluoride-hexafluoropropylene copolymer, polyacrylonitrile, polyimide, acrylonitrile-butadiene copolymer, acrylonitrile-styrene-butadiene copolymer, polymethyl methacrylate, polymethyl acrylate, polyethyl acrylate, acrylic acid-styrene copolymer, polydimethylsiloxane, sodium polyacrylate, or sodium carboxymethyl cellulose; and the inorganic coating is selected from at least one of $SiO_2$, $Al_2O_3$, CaO, $TiO_2$, $ZnO_2$, MgO, $ZrO_2$, or $SnO_2$.

The form and thickness of the separator are not particularly limited in this application. A preparation method of the separator is a preparation method of a separator that is known in the art and can be used for electrochemical devices.

This application further provides an electronic device based on the same inventive concept.

The electronic device of this application is any electronic device, for example, but is not limited to, a notebook computer, a pen-input computer, a mobile computer, an electronic book player, a portable telephone, a portable fax machine, a portable copier, a portable printer, a stereo headset, a video recorder, a liquid crystal display television, a portable cleaner, a portable CD player, a mini-disc, a transceiver, an electronic notebook, a calculator, a storage card, a portable recorder, a radio, a backup power supply, a motor, an automobile, a motorcycle, a motor bicycle, a bicycle, a lighting appliance, a toy, a game console, a timepiece, an electric tool, a flash lamp, a camera, a large household storage battery, or a lithium-ion capacitor. It should be noted that the electrochemical device of this application is applicable to not only the electronic devices listed above but also energy storage power stations, marine transport tools, and airborne transport tools. Airborne transport devices include endoatmospheric airborne transport devices and extra-atmospheric airborne transport devices.

In some embodiments, the electronic device includes the foregoing electrochemical device of this application.

Lithium-ion batteries are used as examples to further illustrate the technical solutions of this application with reference to examples and comparative examples, but are not limited thereto. Persons skilled in the art should understand that the preparation methods described in this application are merely illustrative embodiments, and any modifications or equivalent replacements made to the technical solutions of this application without departing from the scope of the technical solutions of this application should fall within the protection scope of this application.

In the following examples and comparative examples, all reagents, materials, and instruments used are commercially available or synthesized unless otherwise specified.

**Examples and comparative examples**

**Preparation of lithium-ion battery**

(1) Preparation of positive electrode

A positive electrode active material, a conductive agent acetylene black, and a binder poly(vinylidene difluoride) PVDF were mixed at a weight ratio of 96:2:2. N-methylpyrrolidone (NMP) was added. Then, the resulting mixture was stirred to uniformity under the action of a vacuum mixer to prepare a positive electrode slurry. Then, the positive electrode slurry was uniformly applied onto a positive electrode current collector aluminum foil. Then, the aluminum foil was dried, followed by cold pressing, cutting, and slitting. Then, drying was performed in vacuum to obtain a positive electrode.

The conventional positive electrode active material was selected from lithium cobalt oxide ($LiCoO_2$).

Preparation of modified positive electrode active material:

A positive electrode active material lithium cobalt oxide ($LiCoO_2$) and an oxide containing metal element M (at least one of magnesium oxide (MgO), titanium dioxide ($TiO_2$), or aluminum oxide ($Al_2O_3$)) were mixed at 300 r/min in a mixer for 20 min. After mixing, the resulting mixture was placed in an air kiln, heated to 820°C at 5°C/min, kept for 24 h, naturally cooled, and then taken out. Then, the resulting product was sieved through a 300-mesh sieve to obtain a modified positive electrode active material (which was modified $LiCoO_2$). In the modified positive electrode active material, a total proportion of metal element M (Mg, Ti, and Al) in the positive electrode active material was 7000 ppm, and a molar ratio of element Mg, element Ti, and element Al elements was 1:1:1. The specific types of element M were shown in Tables 1 to 4.

(2) Preparation of negative electrode

A negative electrode active material artificial graphite, a conductive agent acetylene black, a binder styrene-butadiene rubber (SBR), and a thickener sodium carboxymethyl cellulose (CMC-Na) were mixed at a weight ratio of

95:2:2:1. Deionized water was added. Then, the resulting mixture was stirred under the action of a vacuum mixer to prepare a negative electrode slurry. Then, the negative electrode slurry was uniformly applied onto a negative electrode current collector copper foil. Then, the copper foil was dried, followed by cold pressing, cutting, and slitting. Then, drying was performed in vacuum to obtain a negative electrode.

(3) Preparation of electrolyte

In a dry argon atmosphere glove box, ethylene carbonate (EC), propylene carbonate (PC), and diethyl carbonate (DEC) were mixed at a mass ratio of 1:1:1. Then, additives were added, dissolved, and stirred well, and then a lithium salt $LiPF_6$ was added. The resulting mixture was mixed well to prepare an electrolyte. Based on a mass of the electrolyte, a mass percentage of $LiPF_6$ was 12.5%. The specific types and percentages of the additives used in the electrolyte were shown in Tables 1 to 4. In the tables, wt% represented a mass percentage obtained through calculation based on the total mass n of the electrolyte.

(4) Preparation of separator

A polyethylene PE porous polymer film was used as the separator.

(5) Preparation of lithium-ion battery

The positive electrode, separator, and negative electrode were stacked sequentially, so that the separator was located between the positive electrode and the negative electrode to provide separation. Then, tab welding and winding were performed to obtain an electrode assembly. Then, the electrode assembly was placed in an outer package aluminum-plastic film, and the prepared electrolyte was injected, followed by processes such as vacuum sealing, standing, formation, shaping, and capacity testing, to obtain a soft pack lithium-ion battery.

**Performance test:**

1. Storage swelling rate of lithium-ion battery at 80°C

At 25°C, the lithium-ion battery was discharged to 3.0 V at 0.5C, then charged to 4.5 V at 0.5C, and charged to 0.05C at a constant voltage of 4.5 V. The thickness of the lithium-ion battery was measured using a PPG soft pack battery thickness gauge (at a pressure of 500 g) and recorded as $H_{11}$. Then, the lithium-ion battery was placed in an oven at 80°C and kept at a constant voltage of 4.5 V for 7 hours. After 7 hours, the thickness of the lithium-ion battery was measured using the PPG soft pack battery thickness gauge (at a pressure of 500 g) and recorded as $H_{12}$.

$$\text{Thickness swelling rate}=(H_{12}-H_{11})/H_{11}\times 100\%.$$

2. High-temperature cycling test of lithium-ion battery at 45°C

The lithium-ion battery was placed in a thermostat at 45°C and left standing for 30 minutes, so that the lithium-ion battery reached a constant temperature. At 45°C, the lithium-ion battery which had reached the constant temperature was charged to 4.5 V at a constant current of 0.2C, then charged to 0.05C at a constant voltage of 4.5 V and left standing for 5 minutes, and then discharged to 3.0 V at a constant current of 0.2C and left standing for 5 minutes, and an initial capacity was tested. Then, the lithium-ion battery was charged to 4.15 V at a constant current of 1.3C and then charged to a current of 1C at a constant voltage of 4.15 V. Then, the lithium-ion battery was charged to 4.25 V at a constant current of 1C and then charged to a current of 0.8C at a constant voltage of 4.25 V. Then, the lithium-ion battery was charged to 4.5 V at a constant current of 0.8C and then charged to a current of 0.05C at a constant voltage of 4.5 V. Then, the lithium-ion battery was left standing for 5 minutes. Then, the lithium-ion battery was discharged to 3.0 V at a constant current of 1C and then left standing for 5 minutes. This process was one charge and discharge cycle. Charge/discharge was performed in this way, and a capacity retention rate of the lithium-ion battery after 400 cycles was calculated.

Capacity retention rate after N cycles of lithium-ion battery (%)=discharge capacity at the N-th cycle/discharge capacity at the first cyclex100%.

The thickness of the lithium-ion battery was measured, and the thickness swelling rate of the lithium-ion battery was calculated through the formula as follows.

Thickness swelling rate=(battery thickness after cycling-battery thickness before cycling)/battery thickness before cycling$\times$100%.

3. High-temperature intermittent cycling test of lithium-ion battery at 45°C

In a thermostat at 45°C, the lithium-ion battery was charged to 4.5 V at a constant current of 1C, and charged to a current of 0.05C at a constant voltage of 4.5 V. Then, the lithium-ion battery was stored at 45°C for 19.5 h, then discharged to 3 V at a constant current of 0.5C, and left standing for 10 minutes. This process was one cycle, and this process was repeated. The thickness change and capacity retention rate of the lithium-ion battery were recorded. The test ended when severe swelling occurred or the cycling capacity retention rate dropped to 60%.

Capacity retention rate of the lithium-ion battery after M cycles (%)=discharge capacity at the M-th cycle/discharge capacity at the first cyclex100%.

4. Hot-box test of lithium-ion battery

At 25°C, the lithium-ion battery was charged to 4.5 V at a constant current of 0.7C, and then charged to a current of 0.05C at a constant voltage of 4.5 V. The battery was placed in a high-temperature box, heated to 135°C at a temperature rise velocity of 5$\pm$2°C/min, and then kept for 1 h; and the changes of the voltage and temperature of the battery and the hot box temperature were recorded. The battery was deemed to pass the test if the battery had no fire, no explosion, and no smoke. 10 batteries in each group were tested, and the number of batteries that passed the test was recorded.

(5) Test for direct-current resistance DCR (at 25°C) of lithium-ion battery

The lithium-ion battery was placed in a thermostat at 25°C and left standing for 1 hour, so that the lithium-ion battery reached a constant temperature. Then, the lithium-ion battery was charged to 4.2 V at a constant current of 0.5C, then charged to 4.5 V at a constant current of 0.3C, charged to a current of 0.02C at a constant voltage of 4.5 V, and left standing for 30 minutes. Then, the lithium-ion battery was discharged to 3.4 V at a constant current of 0.1C and left standing for 30 minutes. A capacity in this step was used as a reference. At 0°C, the lithium-ion battery was charged to 4.2 V at a constant current of 0.5C, then charged to 4.5 V at a constant current of 0.3C, charged to a current of 0.02C at a constant voltage of 4.5 V, and left standing for 30 minutes. Then, the lithium-ion battery was discharged for 60 min at a constant current of 0.1C (calculation was performed using an actual capacity obtained in the previous step), and the voltage at that time was recorded as V1. Then, the lithium-ion battery was discharged for 1s at a constant current of 1C (a capacity was calculated using a labeled capacity of the battery), a voltage at that time was recorded as V2, and a direct-current resistance corresponding to a 20% SOC state of the battery was calculated.

$$20\%\ \text{SOC direct-current resistance}=(V1-V2)/1C.$$

**Performance test results:**

**Table 1 Electrolytes and test results of Examples 1 to 45 and Comparative example 1**

| Example | Polynitrile additive and doped positive electrode material | | | | | | Cycling performance at 45°C (400 cls) | Hot-box performance at 135°C for 60 min |
|---|---|---|---|---|---|---|---|---|
| | Polynitrile additive | | Doping element | | Percentage of polynitrile additive X (%) | X/b (b=b1+b2 ) | | |
| | Compound represented by formula (I-A) | Compound represented by formula (II-A) | Percentage of Mg b1 (%) | Percentage of Al b2 (%) | | | | |
| Comparative example 1 | / | / | / | / | / | / | 65.20% | 0/10Pass |
| Comparative example 2 | I-17 | / | / | / | 0.5 | / | 76.35% | 4/10Pass |
| Comparative example 3 | / | / | 0.5 | / | / | / | 75.24% | 5/10Pass |
| Comparative example 4 | / | II-1 | / | / | 0.5 | / | 74.65% | 6/10Pass |
| Comparative example 5 | / | / | / | 0.5 | / | / | 76.35% | 5/10Pass |
| Example 1 | I-17 | / | 0.5 | / | 0.1 | 0.2 | 78.54% | 6/10Pass |
| Example 2 | | / | 0.5 | / | 0.3 | 0.6 | 80.24% | 6/10Pass |
| Example 3 | | / | 0.5 | / | 0.5 | 1 | 82.15% | 7/10Pass |
| Example 4 | | / | 0.5 | / | 1.5 | 3 | 84.21% | 7/10Pass |
| Example 5 | | / | 0.1 | / | 0.5 | 5 | 80.13% | 5/10Pass |
| Example 6 | | / | 1 | / | 0.5 | 0.5 | 84.35% | 8/10Pass |
| Example 7 | | / | / | 0.5 | 0.5 | 1 | 83.75% | 8/10Pass |
| Example 8 | I-2 | / | 0.5 | / | 0.5 | 1 | 82.75% | 7/10Pass |
| Example 9 | I-3 | / | 0.5 | / | 0.3 | 0.6 | 83.45% | 7/10Pass |
| Example 10 | | / | 0.5 | / | 0.5 | 1 | 82.65% | 8/10Pass |
| Example 11 | I-18 | / | 0.5 | / | 0.3 | 0.6 | 82.87% | 8/10Pass |
| Example 12 | I-19 | / | 0.5 | / | 0.3 | 0.6 | 82.57% | 9/10Pass |

(continued)

| Example | Polynitrile additive and doped positive electrode material | | | | | | Cycling performance at 45°C (400 cls) | Hot-box performance at 135°C for 60 min |
|---|---|---|---|---|---|---|---|---|
| | Polynitrile additive | | Doping element | | Percentage of polynitrile additive X (%) | X/b (b=b1+b2 ) | | |
| | Compound represented by formula (I-A) | Compound represented by formula (II-A) | Percentage of Mg b1 (%) | Percentage of Al b2 (%) | | | | |
| Example 13 | I-4 | / | 0.5 | / | 0.3 | 0.6 | 83.37% | 8/10Pass |
| Example 14 | | / | / | 0.5 | 0.3 | 0.6 | 83.87% | 9/10Pass |
| Example 15 | | / | / | 0.3 | 0.3 | 1 | 82.85% | 8/10Pass |
| Example 16 | / | II-1 | 0.5 | / | 0.5 | 1 | 83.67% | 10/10Pass |
| Example 17 | | | 0.2 | / | 0.5 | 2.5 | 82.87% | 10/10Pass |
| Example 18 | | | 1 | / | 0.5 | 0.5 | 84.25% | 10/10Pass |
| Example 19 | | | 0.5 | / | 0.3 | 0.6 | 83.45% | 9/10Pass |
| Example 20 | | | 0.5 | / | 1.5 | 3 | 85.34% | 10/10Pass |
| Example 21 | | | / | 0.5 | 0.5 | 1 | 84.67% | 10/10Pass |
| Example 22 | | | / | 0.2 | 0.5 | 2.5 | 83.44% | 10/10Pass |
| Example 21 | / | II-4 | 0.5 | / | 0.5 | 1 | 84.67% | 10/10Pass |
| Example 22 | / | II-22 | 0.5 | / | 0.2 | 0.4 | 83.72% | 10/10Pass |
| Example 23 | / | II-7 | 0.5 | / | 0.3 | 0.6 | 83.87% | 10/10Pass |
| Example 24 | / | II-9 | 0.5 | / | 0.5 | 1 | 84.17% | 10/10Pass |
| Example 25 | / | II-10 | 0.5 | / | 0.3 | 0.6 | 83.28% | 10/10Pass |
| Example 26 | | | 0.5 | / | 0.6 | 1.2 | 84.21% | 10/10Pass |
| Example 27 | | | 0.5 | / | 1.5 | 3 | 84.65% | 10/10Pass |
| Example 28 | | | 0.3 | / | 0.6 | 2 | 84.77% | 10/10Pass |
| Example 29 | | | 1 | / | 0.3 | 0.3 | 83.45% | 10/10Pass |
| Example 30 | | | / | 0.5 | 0.5 | 1 | 84.89% | 10/10Pass |
| Example 31 | | | / | 0.2 | 0.5 | 2.5 | 83.45% | 10/10Pass |
| Example 32 | | | / | 0.5 | 1 | 2 | 85.17% | 10/10Pass |

(continued)

| Example | Polynitrile additive and doped positive electrode material | | | | | | Cycling performance at 45°C (400 cls) | Hot-box performance at 135°C for 60 min |
|---|---|---|---|---|---|---|---|---|
| | Polynitrile additive | | Doping element | | Percentage of polynitrile additive X (%) | X/b (b=b1+b2 ) | | |
| | Compound represented by formula (I-A) | Compound represented by formula (II-A) | Percentage of Mg b1 (%) | Percentage of Al b2 (%) | | | | |
| Example 33 | / | II-12 | 0.5 | / | 0.3 | 0.6 | 84.15% | 10/10Pass |
| Example 34 | / | II-13 | 0.5 | / | 0.5 | 1 | 85.23% | 10/10Pass |
| Example 35 | / | II-23 | 0.5 | / | 0.3 | 0.6 | 85.21% | 10/10Pass |
| Example 36 | / | II-16 | 0.5 | / | 0.2 | 0.4 | 84.96% | 10/10Pass |
| Example 37 | / | II-19 | 1 | / | 0.5 | 0.5 | 85.45% | 10/10Pass |
| Example 38 | | | 0.5 | / | 0.5 | 1 | 84.34% | 10/10Pass |
| Example 39 | / | II-24 | 0.5 | / | 0.3 | 0.6 | 85.15% | 10/10Pass |
| Example 40 | | | 0.5 | / | 0.2 | 0.4 | 84.68% | 10/10Pass |
| Example 41 | I-1 | II-1 | 0.5 | / | 0.5+0.5 | 2 | 87.75% | 10/10Pass |
| Example 42 | I-1 | II-4 | 0.5 | / | 0.5+0.2 | 1.4 | 86.45% | 10/10Pass |
| Example 43 | I-1 | II-10 | 0.5 | / | 0.5+0.5 | 2 | 87.95% | 10/10Pass |
| Example 44 | | | / | 0.5 | 0.5+0.5 | 2 | 88.15% | 10/10Pass |
| Example 45 | I-1 | II-1 | 0.5 | 0.3 | 0.5+0.5 | 1.25 | 90.67% | 10/10Pass |

It can be seen from Table 1 that in Comparative example 1, no doping element is added into the positive electrode active material, and no polynitrile additive is added into the electrolyte. The cycling performance and hot-box performance of the battery are relatively poor.

As compared with Comparative example 1, in each of Comparative examples 2 to 5, the doping element was added into the positive electrode active material alone or the polynitrile additive is added into the electrolyte alone. The cycling performance and/or hot-box performance of the batteries are improved, but cannot meet the requirements.

As compared with comparative examples, in the examples, the positive electrode active material is doped with the element such as Mg, Al, or Ti. Such element effectively occupies the transition metal or lithium sites in the positive electrode active material during sintering. This can improve the structural stability and thermal stability of the positive electrode active material after delithiation, and ensure the internal structural stability of the positive electrode active material. The polynitrile additive can effectively complex with the transition metals on the surface of the positive electrode active material to form a stable interfacial protection film at the interface of the positive electrode active material. This can effectively inhibit the dissolution of the transition metals on the surface of the positive electrode active material. In addition, this effectively avoids the contact between the interface of the positive electrode active material and the electrolyte, and reduces side reactions at the interface of the positive electrode active material.

The doping element and the polynitrile additive synergize with each other to stabilize both the internal structure and surface structure of the positive electrode active material after delithiation, thereby effectively improving the cycling performance of the battery at high temperatures. The polynitrile additive can effectively inhibit side reactions at the interface of the positive electrode active material and reduce the heat generated at the interface. The positive electrode active material subjected to doping can improve the thermal stability of the positive electrode active material. The doping element and the polynitrile additive not only reduce the heat generated at the interface of the positive electrode active material, but also improve the thermal stability of the positive electrode active material. Therefore, the safety performance of the battery is effectively improved.

**Table 2 Test results of Comparative example 2 and** Examples 46 to 53

| Example | Polynitrile additive and Mg-doped positive electrode material | | | Cycling performance at 45°C (400 cls) | Hot-box performance at 135°C for 60 min |
|---|---|---|---|---|---|
| | Percentage of polynitrile additive X (%) | Percentage of Mg b1 (%) | X/b1 | | |
| Comparative example 2 | 0.5 | / | / | 76.35% | 4/10Pass |
| Example 46 | 0.5 | 0.005 | 100 | 76.37% | 4/10Pass |
| Example 47 | 0.5 | 0.01 | 50 | 78.53% | 5/10Pass |
| Example 48 | 0.5 | 0.1 | 5 | 80.56% | 6/10Pass |
| Example 49 | 0.5 | 0.2 | 2.5 | 81.47% | 6/10Pass |
| Example 50 | 0.5 | 0.5 | 1 | 82.15% | 7/10Pass |
| Example 51 | 0.5 | 1 | 0.5 | 80.89% | 8/10Pass |
| Example 52 | 1 | 0.01 | 100 | 76.57% | 6/10Pass |
| Example 53 | 0.7 | 0.1 | 7 | 81.75% | 8/10Pass |

It can be seen from Table 2 that the constituents of the electrolyte in each of Examples 46 to 53 are the same as those of the electrolyte in Comparative example 2, but the doping element Mg is added into the positive electrode active material in each of Examples 46 to 53. Element Mg for doping can effectively occupy the transition metal sites or lithium sites in the positive electrode active material, significantly improving the structural stability of the positive electrode active material after delithiation, thereby significantly improving the cycling performance of the battery. The doping of element Mg can effectively improve the thermal stability of the positive electrode active material and thus also significantly improve the hot-box performance. When the doping amount of element Mg is high, the overall resistance of the battery increases significantly, affecting the extractable gram capacity of the positive electrode active material, thereby affecting the overall cycling performance of the battery. When the ratio of the doping amount of Mg and the percentage of the polynitrile additive falls within the specified range, the hot-box performance and cycling performance of the battery can be significantly improved.

**Table 3 Test results of Comparative example 2 and Examples 54 to 74**

| | Particle size $D_v50$ of first particles (μm) | Particle size $D_v99$ of first particles (μm) | Particle size $D_v50'$ of second particles (μm) | Median particle size of primary particles in second particles (μm) | $D_v99/D_v50$ | $D_v50/Dv50'$ | High-temperature storage swelling rate | Cycling capacity retention rate |
|---|---|---|---|---|---|---|---|---|
| Comparative example 2 | 12 | 27 | 3 | 0.3 | 2.3 | 4 | 18.70% | 76.35% |
| Example 54 | 12 | 27 | 3 | 0.3 | 2.3 | 4 | 9.60% | 84.58% |
| Example 55 | 10 | 20 | 3 | 0.3 | 2 | 3.3 | 16.56% | 80.15% |
| Example 56 | 10 | 25 | 3 | 0.3 | 2.5 | 3.3 | 10.30% | 83.00% |
| Example 57 | 8 | 19 | 3 | 0.3 | 2.7 | 2.6 | 17.20% | 79.67% |
| Example 58 | 15 | 21 | 3 | 0.3 | 1.4 | 5 | 17.57% | 80.07% |
| Example 59 | 15 | 23 | 3 | 0.3 | 1.5 | 7.7 | 10.67% | 82.35% |
| Example 60 | 17 | 30 | 3 | 0.3 | 1.8 | 5.7 | 15.27% | 79.27% |
| Example 61 | 12 | 35 | 3 | 0.3 | 2.9 | 4 | 14.65% | 79.54% |
| Example 62 | 12 | 38 | 3 | 0.3 | 3.2 | 12.7 | 18.80% | 78.85% |
| Example 63 | 15 | 28 | 2.1 | 0.3 | 1.9 | 7 | 10.07% | 81.08% |
| Example 64 | 12 | 27 | 1 | 0.3 | 2.3 | 12 | 18.75% | 79.23% |
| Example 65 | 12 | 27 | 1.5 | 0.3 | 2.3 | 8 | 17.95% | 79.18% |
| Example 66 | 12 | 27 | 2 | 0.3 | 2.3 | 6 | 15.80% | 81.97% |
| Example 67 | 12 | 27 | 4 | 0.3 | 2.3 | 3 | 12.10% | 83.25% |
| Example 68 | 12 | 27 | 6 | 0.3 | 2.3 | 2 | 16.20% | 80.21% |
| Example 69 | 12 | 27 | 8 | 4 | 2.3 | 1.5 | 18.10% | 79.87% |
| Example 70 | 12 | 27 | 4 | 0.05 | 2.3 | 3 | 16.90% | 79.96% |
| Example 71 | 12 | 27 | 4 | 0.1 | 2.3 | 3 | 15.87% | 81.17% |
| Example 72 | 12 | 27 | 4 | 0.5 | 2.3 | 3 | 12.70% | 85.16% |
| Example 73 | 12 | 27 | 4 | 1 | 2.3 | 3 | 11.30% | 84.32% |
| Example 74 | 12 | 27 | 4 | 3 | 2.3 | 3 | 9.20% | 83.27% |

It can be seen from Table 3 that in Examples 54 to 74, the particle size is improved based on Example 4. When the positive electrode active material satisfies the following conditions: $D_v50$ of the first particles falls within a range of 10 μm to 15 μm; $D_v99$ of the first particles falls within a range of 20 μm to 30 μm; $D_v50'$ of the second particles falls within a range of 2 μm to 6 μm; $1.5 \leq D_v99/D_v50 < 3$; and/or $2 \leq D_v50/D_v50' < 8$, the high-temperature storage swelling rate and cycling capacity retention rate of the lithium-ion battery under high-voltage operating conditions can be further improved.

When the second particles of the positive electrode active material include secondary particles, and the median particle size of the primary particles forming the secondary particles is 0.1 μm to 3 μm, the high-temperature storage swelling rate and cycling capacity retention rate of the lithium-ion battery under high-voltage operating conditions can be further improved.

**Table 4 Electrolytes and test results of Comparative example 2 and Examples 75 to 85**

| Example | Cyclic sulfonate additive ($c\%=c_1\%+c_2\%+c_3\%$) | | | | Cycling performance at 45°C (400 cls) | High-temperature storage swelling rate | DCR at 20% SOC at 25°C (mΩ) |
|---|---|---|---|---|---|---|---|
| | Monosultone | | Disultone | X/c | | | |
| | Percentage of 1,3-propane sultone $c_1$ (%) | Percentage of 1,4-butane sultone $c_2$ (%) | Percentage of methylene methane disulfonate $c_3$ (%) | | | | |
| Comparative example 2 | / | / | / | / | 76.35% | 18.70% | 35.6 |
| Example 75 | 0.01 | / | / | 50 | 79.50% | 14.50% | 37.2 |
| Example 76 | 1 | / | / | 0.5 | 86.80% | 12.80% | 34.4 |
| Example 77 | 4 | / | / | 0.125 | 88.50% | 8.20% | 32.3 |
| Example 78 | 10 | / | / | 0.05 | 86.20% | 7.95% | 34.7 |
| Example 79 | 11 | / | / | 0.045 | 77.52% | 7.78% | 35.2 |
| Example 80 | / | 2 | / | 0.25 | 87.21% | 12.30% | 33.8 |
| Example 81 | / | 4 | / | 0.125 | 88.30% | 8.50% | 32 |
| Example 82 | / | 6 | / | 0.083 | 87.15% | 8.23% | 33.2 |
| Example 83 | / | / | 0.2 | 0.4 | 86.85% | 11.50% | 34.2 |
| Example 84 | / | / | 0.5 | 1 | 88.18% | 10.20% | 33.4 |
| Example 85 | / | / | 1 | 0.5 | 85.20% | 8.70% | 34.5 |

It can be seen from Table 4 that Examples 75 to 85 are further improved based on Example 4. In Examples 75 to 85, the cyclic sulfonate additive is further added into the electrolyte. The cyclic sulfonate additive can further improve the high-temperature cycling performance of the lithium-ion battery and reduce the direct-current resistance of the lithium-ion battery. The reason may be that the cyclic sulfate compound can form interfacial films with excellent mechanical stability on the surfaces of the positive electrode and the negative electrode. The interfacial films can significantly inhibit side reactions at the interfaces of the positive electrode and the negative electrode, the thermal stability and mechanical stability of the interfacial films are further improved, and the cycling performance and high-temperature storage performance are improved.

In addition, when the mass percentage c% of the cyclic sulfonate additive is excessively low, for example, less than 0.01%, the cyclic sulfonate additive may not form complete and effective organic films on the surfaces of the positive electrode and the negative electrode, resulting in weak protection for the surfaces of the positive electrode and negative electrode. However, when the mass percentage c% of the cyclic sulfonate additive is excessively high, the formed films are thick and may hinder the migration of lithium ions. Therefore, in the examples, when $0.10\% \le c \le 10\%$, the formed interfacial films can effectively protect the positive electrode and the negative electrode and ensure the smooth migration of lithium ions. Moreover, the synergistic combination of the cyclic sulfonate additive and the polynitrile additive can further improve the cycling performance and high-temperature storage performance of the lithium-ion battery.

Although illustrative embodiments have been demonstrated and described, persons skilled in the art should understand that the foregoing embodiments cannot be construed as limitations on this application, and that these embodiments may be changed, replaced, and modified without departing from the spirit, principle, and scope of this application.

## Claims

**1.** An electrochemical device, comprising:

a negative electrode;
a positive electrode comprising a positive electrode active material containing a doping element, wherein the doping element comprises one or more selected from the group consisting of aluminum Al, magnesium Mg,

zirconium Zr, titanium Ti, and lanthanum La; and based on a mass of the positive electrode active material, a mass percentage of the doping element is b%, wherein $0.01 \leq b \leq 3$;

a separator disposed between the negative electrode and the positive electrode; and

an electrolyte comprising a polynitrile additive, wherein the polynitrile additive comprises a compound represented by formula (I-A) and/or a compound represented by formula (II-A):

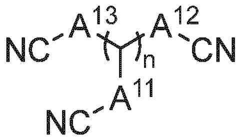 formula (I-A) 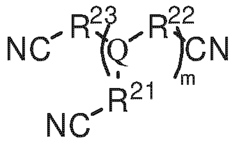 formula (II-A);

wherein in formula (I-A), $A^{11}$, $A^{12}$, and $A^{13}$ are each independently selected from formula (I-A1) and formula (I-A2):

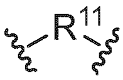 formula (I-A1) 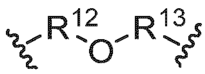 formula (I-A2);

in formula (I-A), n is a positive integer from 1 to 8, and when multiple $A^{11}$ are present, the multiple $A^{11}$ are the same or different, and at least two of $A^{11}$ , $A^{12}$, and $A^{13}$ are selected from I-A2;

in formula (II-A), Q is selected from one of formula (II-A1) or formula (II-A2):

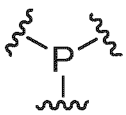 formula (II-A1) 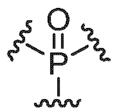 formula (II-A2);

in formula (II-A), m is selected from 1 or 2;

Rl1, $R^{12}$, $R^{13}$, $R^{21}$, $R^{22}$, and $R^{23}$ are each independently selected from a covalent single bond, a substituted or unsubstituted $C_1$-$C_{10}$ alkylene group, a substituted or unsubstituted $C_2$-$C_{10}$ alkenylene group, a substituted or unsubstituted $C_2$-$C_{10}$ alkynylene group, a substituted or unsubstituted $C_6$-$C_{10}$ arylene group, a substituted or unsubstituted $C_3$-$C_{10}$ cycloalkylene group, a substituted or unsubstituted $C_1$-$C_{10}$ heterocyclene group, and a substituted or unsubstituted functional group containing heteroatoms, wherein when at least one of $R^{11}$, $R^{12}$, $R^{13}$, $R^{21}$, $R^{22}$, or $R^{23}$ is substituted, a substituent group is selected from halogens; and

the heterocyclene group comprises at least one of an aliphatic heterocyclene group or an aromatic heterocyclene group;

wherein

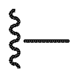

represents a bonding site with an adjacent atom.

2. The electrochemical device according to claim 1, wherein

based on a mass of the electrolyte, a mass percentage of the polynitrile additive is X%, wherein $0.15 \leq X/b \leq 100$, and optionally $1 \leq X/b \leq 50$.

3. The electrochemical device according to claim 1, wherein the formula (I-A2) in the compound represented by formula (I-A) is provided in a quantity of 4 to 10.

4. The electrochemical device according to any one of claims 1 to 3, wherein the polynitrile additive comprises at least one of compounds represented by formula (I-1) to formula (I-19):

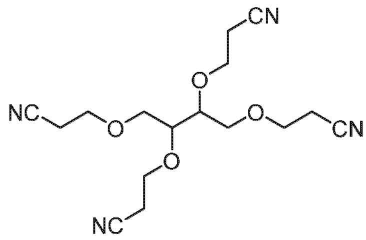

formula (I-1)

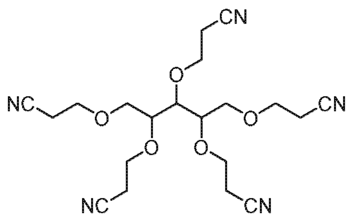

formula (I-2)

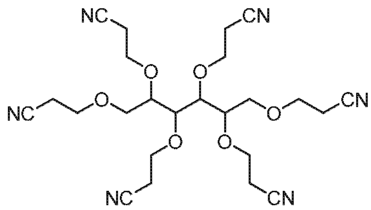

formula (I-3)

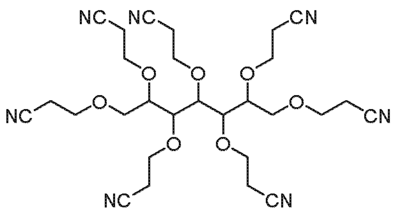

formula (I-4)

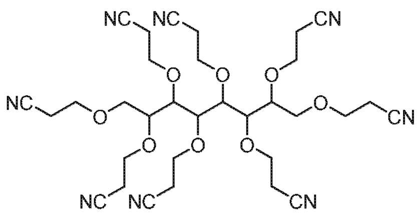

formula (I-5)

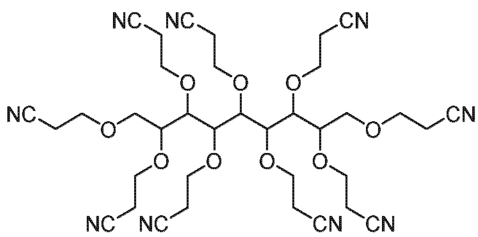

formula (I-6)

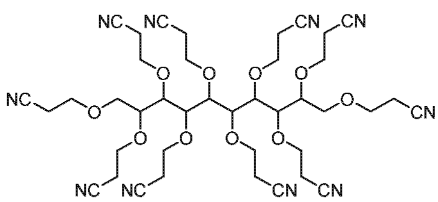

formula (I-7)

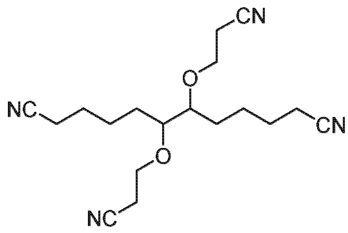

formula (I-8)

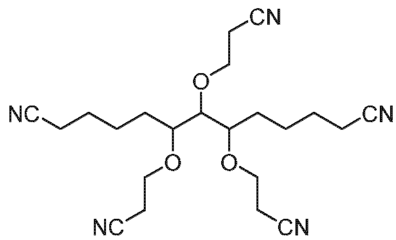

formula (I-9)

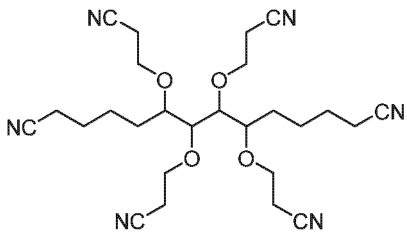

formula (I-10)

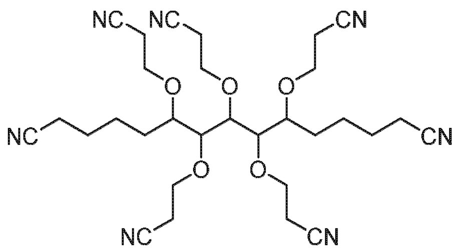

formula (I-11)

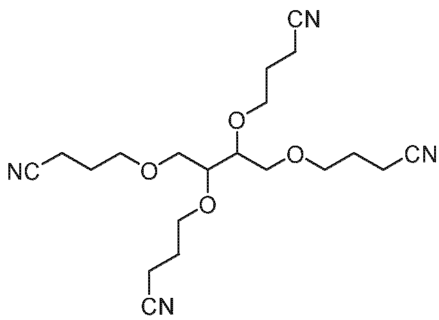

formula (I-12)

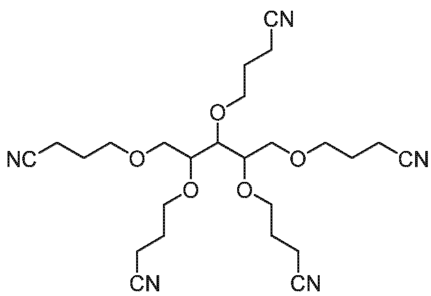

formula (I-13)

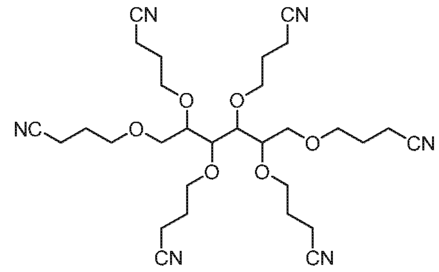

formula (I-14)

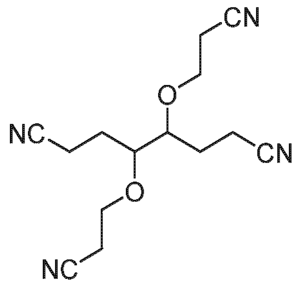

formula (I-15)

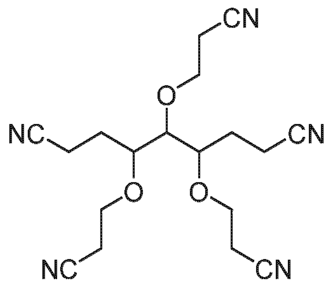

formula (I-16)

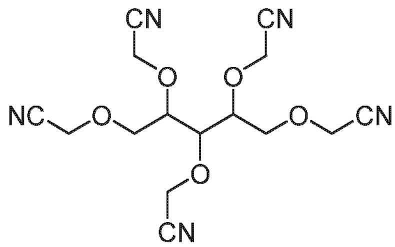

formula (I-17)

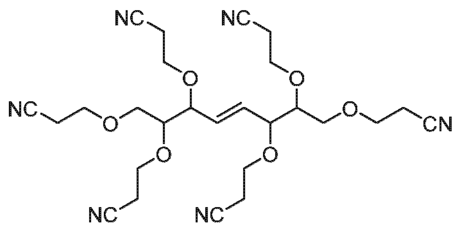

formula (I-18)

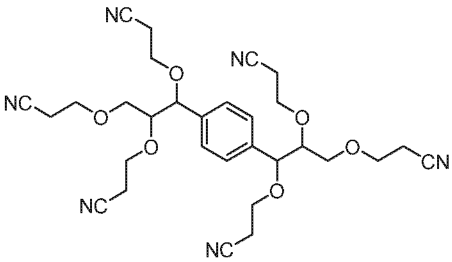
formula (I-19).

**5.** The electrochemical device according to any one of claims 1 to 4, wherein the polynitrile additive comprises at least one of compounds represented by formula (II-1) to formula (II-21):

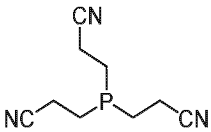
formula (II-1)

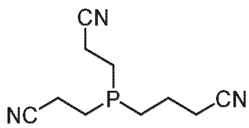
formula (II-2)

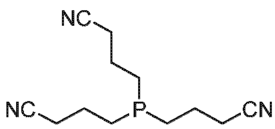
formula (II-3)

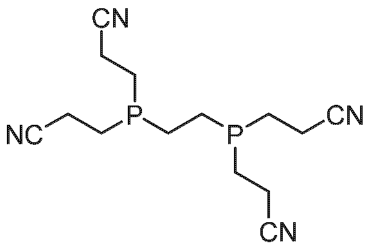
formula (II-4)

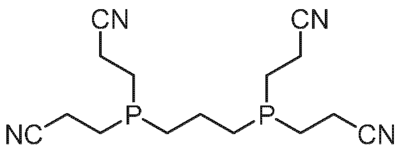
formula (II-5)

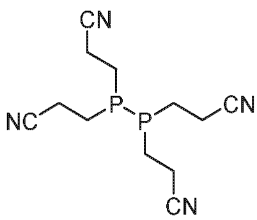
formula (II-6)

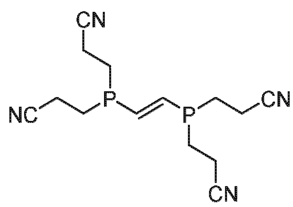
formula (II-7)

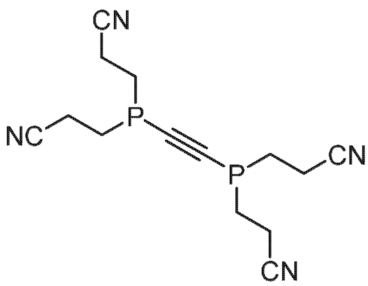
formula (II-8)

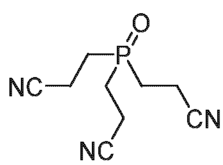
formula (II-9)

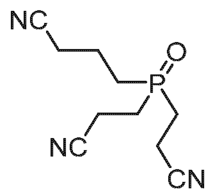 formula (II-10)

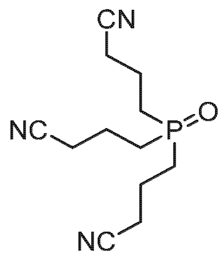 formula (II-11)

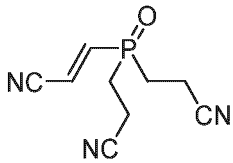 formula (II-12)

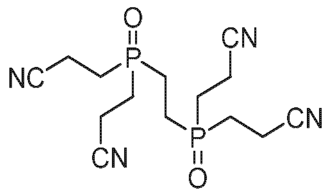 formula (II-13)

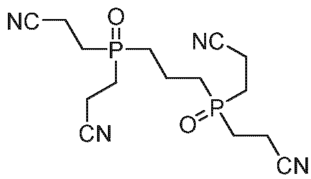 formula (II-14)

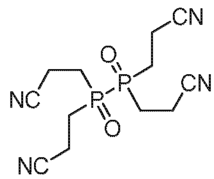 formula (II-15)

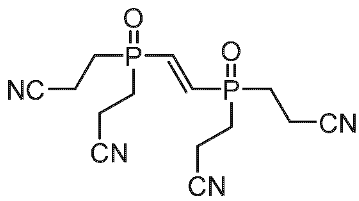 formula (II-16)

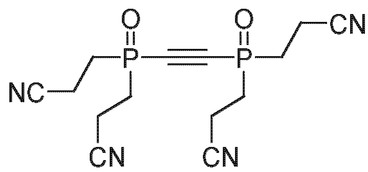 formula (II-17)

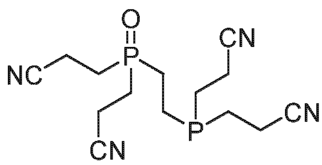 formula (II-18)

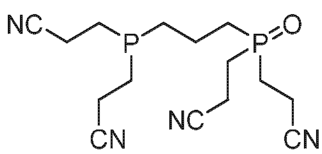 formula (II-19)

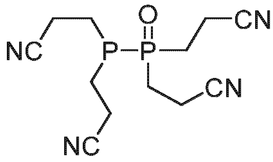 formula (II-20)

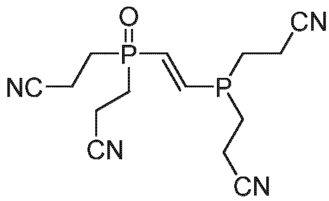 formula (II-21).

6. The electrochemical device according to any one of claims 1 to 5, wherein the electrolyte further comprises a cyclic sulfonate additive, and the cyclic sulfonate additive comprises a compound represented by formula (III):

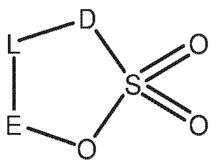 formula (III);

wherein D and E are each independently selected from a substituted or unsubstituted $C_1$-$C_8$ alkylene group, and when substituted, a substituent group is selected from fluorine atoms;
optionally, D and E are each independently selected from a substituted or unsubstituted $C_1$-$C_6$ alkylene group; and
further optionally, D and E are each independently selected from a substituted or unsubstituted $C_1$-$C_4$ alkylene group; and
L is selected from a covalent single bond and $-O-S(=O)_2-$.

7. The electrochemical device according to claim 6, wherein

the cyclic sulfonate additive comprises a compound represented by formula (III-1):

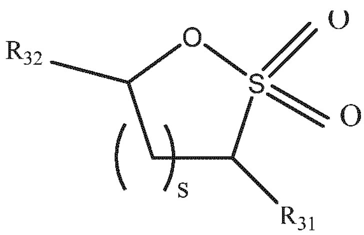 formula (III-1);

wherein $R_{31}$ and $R_{32}$ are each independently selected from a hydrogen atom, a halogen atom, and a $C_1$-$C_4$ alkyl group; and
s is a positive integer from 1 to 4.

8. The electrochemical device according to claim 6 or 7, wherein

the cyclic sulfonate additive comprises a compound represented by formula (III-2):

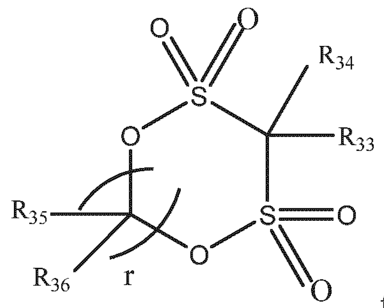

formula (III-2);

wherein $R_{33}$ and $R_{34}$ are each independently selected from a hydrogen atom, a halogen atom, and a $C_1$-$C_4$ alkyl group;

$R_{35}$ and $R_{36}$ are each independently selected from a hydrogen atom, a halogen atom, and a $C_1$-$C_4$ alkyl group; and

r is a positive integer from 1 to 4, wherein when r≥2, multiple $R_{35}$ are the same or different, and multiple $R_{36}$ are the same or different.

**9.** The electrochemical device according to any one of claims 6 to 8, wherein the cyclic sulfonate additive comprises one or more selected from the group consisting of 1,3-propane sultone, 1,2-propane sultone, 1,4-butane sultone, 1,2-butane sultone, 1,3-butane sultone, 2,4-butane sultone, 1,3-pentane sultone, methylene methane disulfonate, and ethylene methane disulfonate.

**10.** The electrochemical device according to any one of claims 6 to 9, wherein

based on the mass of the electrolyte, a mass percentage of the cyclic sulfonate additive is c%, wherein $0.10 \leq c \leq 10$; and

optionally, a ratio of the mass percentage b% of the doping element to the mass percentage c% of the cyclic sulfonate additive satisfies: $0.005 \leq b/c \leq 20$.

**11.** The electrochemical device according to any one of claims 1 to 10, wherein

the doping element is magnesium Mg; and

optionally, $0.01 \leq b \leq 0.5$.

**12.** The electrochemical device according to any one of claims 1 to 11, wherein

the positive electrode active material comprises first particles and second particles, wherein an average particle size of the first particles is greater than an average particle size of the second particles; and

optionally, the positive electrode active material satisfies at least one of the following conditions:

a $D_v50$ of the first particles satisfies: 10 $\mu$m$\leq D_v50 \leq$15 $\mu$m;

a $D_v99$ of the first particles satisfies: 20 $\mu$m$\leq D_v99 \leq$30 $\mu$m;

a ratio of a $D_v50$ to a $D_v99$ of the first particles satisfies: $1.5 \leq D_v99/D_v50 < 3$;

a $D_v50'$ of the second particles satisfies: 2 $\mu$m$\leq D_v50' \leq$6 $\mu$m; or

a ratio of a $D_v50$ of the first particles to a $D_v50'$ of the second particles satisfies: $2 \leq D_v50/D_v50' < 8$.

**13.** The electrochemical device according to claim 12, wherein a ratio of a $D_v50$ of the first particles to a mass percentage X of the polynitrile additive satisfies: $7 \leq D_v50/X \leq 50$, and optionally $10 \leq D_v50/X \leq 30$.

**14.** The electrochemical device according to any one of claims 1 to 13, wherein after the electrochemical device is fully charged to 4.5 V, the positive electrode is tested using a differential scanning calorimeter and has an exothermic peak at 250°C to 300°C.

**15.** An electronic device, comprising the electrochemical device according to any one of claims 1 to 14.

**INTERNATIONAL SEARCH REPORT**

International application No. **PCT/CN2022/122756**

**A. CLASSIFICATION OF SUBJECT MATTER**

H01M10/0567(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT, CNKI, WPABS, EXTXT, STN: 电化学装置, 正极活性, 掺, 镁, 铝, 电解液, 多氰, 多腈, 醚, 膦, 成膜, 保护膜, electrolyte, electrochemical device, cyanoethyl+, +nitrile, ethoxy+, phosphin+, film, protect+, therm+

**C. DOCUMENTS CONSIDERED TO BE RELEVANT**

| Category* | Citation of document, with indication, where appropriate, of the relevant passages | Relevant to claim No. |
|---|---|---|
| X | CN 114365319 A (NINGDE AMPEREX TECHNOLOGY LTD.) 15 April 2022 (2022-04-15) description, paragraphs [0003]-[0018] and [0084]-[0106] | 1-3, 6, 7, 9-11, 14, 15 |
| Y | CN 114365319 A (NINGDE AMPEREX TECHNOLOGY LTD.) 15 April 2022 (2022-04-15) description paragraphs [0003]-[0018] and [0084]-[0106] | 4, 5, 8, 12, 13 |
| Y | CN 114400375 A (NINGDE AMPEREX TECHNOLOGY LTD.) 26 April 2022 (2022-04-26) description, paragraphs [0004]-[0024], [0060]-[0066], and [0255] | 4, 5, 8 |
| Y | CN 113078309 A (NINGDE AMPEREX TECHNOLOGY LTD.) 06 July 2021 (2021-07-06) description, paragraphs [0004]-[0056] and [0218]-[0272] | 12, 13 |
| A | CN 108428940 A (SK INNOVATION CO., LTD.) 21 August 2018 (2018-08-21) entire document | 1-15 |
| A | CN 111540945 A (NINGDE AMPEREX TECHNOLOGY LTD.) 14 August 2020 (2020-08-14) entire document | 1-15 |
| A | CN 112724043 A (NINGDE AMPEREX TECHNOLOGY LTD.) 30 April 2021 (2021-04-30) entire document | 1-15 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **18 April 2023** | **23 April 2023** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**

International application No.
**PCT/CN2022/122756**

**C. DOCUMENTS CONSIDERED TO BE RELEVANT**

| Category* | Citation of document, with indication, where appropriate, of the relevant passages | Relevant to claim No. |
|---|---|---|
| A | CN 112751081 A (DONGGUAN AMPEREX TECHNOLOGY LTD.) 04 May 2021 (2021-05-04)<br>entire document | 1-15 |
| A | CN 113078362 A (NINGDE AMPEREX TECHNOLOGY LTD.) 06 July 2021 (2021-07-06)<br>entire document | 1-15 |
| A | CN 113299971 A (ZHUHAI COSMX BATTERY CO., LTD.) 24 August 2021 (2021-08-24)<br>entire document | 1-15 |
| A | CN 113906606 A (NINGDE AMPEREX TECHNOLOGY LTD.) 07 January 2022 (2022-01-07)<br>entire document | 1-15 |
| A | CN 114068910 A (NINGDE AMPEREX TECHNOLOGY LTD.) 18 February 2022 (2022-02-18)<br>entire document | 1-15 |
| A | US 2022052382 A1 (NINGDE AMPEREX TECHNOLOGY LTD.) 17 February 2022 (2022-02-17)<br>entire document | 1-15 |

Form PCT/ISA/210 (second sheet) (July 2022)

**INTERNATIONAL SEARCH REPORT**
**Information on patent family members**

International application No.
**PCT/CN2022/122756**

| Patent document cited in search report | Publication date (day/month/year) | Patent family member(s) | Publication date (day/month/year) |
|---|---|---|---|
| CN 114365319 A | 15 April 2022 | None | |
| CN 114400375 A | 26 April 2022 | None | |
| CN 113078309 A | 06 July 2021 | None | |
| CN 108428940 A | 21 August 2018 | US 2018233778 A1 | 16 August 2018 |
| | | US 10608283 B2 | 31 March 2020 |
| | | KR 20180093700 A | 22 August 2018 |
| CN 111540945 A | 14 August 2020 | None | |
| CN 112724043 A | 30 April 2021 | CN 112724043 B | 21 February 2023 |
| CN 112751081 A | 04 May 2021 | CN 112751081 B | 08 November 2022 |
| CN 113078362 A | 06 July 2021 | None | |
| CN 113299971 A | 24 August 2021 | None | |
| CN 113906606 A | 07 January 2022 | None | |
| CN 114068910 A | 18 February 2022 | None | |
| US 2022052382 A1 | 17 February 2022 | KR 20210074393 A | 21 June 2021 |
| | | EP 3985773 A4 | 20 April 2022 |
| | | WO 2022032585 A1 | 17 February 2022 |
| | | JP 2022547364 A | 14 November 2022 |

Form PCT/ISA/210 (patent family annex) (July 2022)